# EUROPEAN PATENT APPLICATION

(11) **EP 4 510 351 A1**
(43) Date of publication of application: **19.02.2025**
(21) Application number: 22965537.8
(22) Date of filing: 17.11.2022
(51) Int. Cl.: H01M 50/342, H01M 50/103, H01M 10/04, H01M 50/209, H01M 50/249

(54) **SHELL COMPONENT, BATTERY CELL, BATTERY AND ELECTRIC DEVICE**

(71) Applicant: Contemporary Amperex Technology Co., Limited, Ningde, Fujian 352100 (CN)
(72) Inventor: CHEN, Xiaobo, Ningde, Fujian 352100 (CN); GU, Mingguang, Ningde, Fujian 352100 (CN)
(74) Representative: Ran, Handong
(86) International application number: PCT/CN2022/132665
(87) International publication number: WO 2024/103355

(57) **Abstract**

Embodiments of the present application provide a shell component, a battery cell, a battery, and an electric device. The shell component comprises a non-weak area and a weak area which are integrally formed, the shell component is provided with a groove part, the non-weak area is formed around the groove part, the weak area is formed at the bottom of the groove part, and the weak area is configured to be damaged when the battery cell releases internal pressure. The average grain size of the weak area is S1, and the average grain size of the non-weak area is S2, wherein S1/S2≤0.9. The average grain size of the weak area is reduced, the mechanical properties of materials of the weak area are improved, the toughness and the fatigue resistance of the weak area are improved, the risk that the weak area is damaged under the normal use condition of the battery cell is reduced, and the service life of the battery cell is prolonged.

## Description

### TECHNICAL FIELD

The present application relates to the technical field of batteries, and specifically relates to a shell component, a battery cell, a battery, and an electrical device.

### BACKGROUND

With the development of new energy technologies, batteries are increasingly widely used, such as use in a mobile phone, a notebook computer, a battery car, an electric vehicle, an electric airplane, an electric boat, an electric toy car, an electric toy boat, an electric toy plane, and an electric tool.

In the development of battery technologies, not only is safety of a battery cell to be improved, but also service life of the battery cell is a problem to be considered. Therefore, how to improve the service life of the battery cell is a problem to be urgently solved in the battery technologies.

### SUMMARY

Embodiments of the present application provide a shell component, a battery cell, a battery, and an electrical device, which can effectively improve the service life of the battery.

In a first aspect, an embodiment of the present application provides a shell component for a battery cell, comprising a non-weak region and a weak region that are integrally formed. The shell component is provided with a groove portion, the non-weak region is formed around the groove portion, the weak region is formed at the bottom of the groove portion, and the weak region is configured to be damaged when an internal of the pressure the battery cell is released; wherein an average grain size of the weak region is S₁, and an average grain size of the non-weak region is S₂, satisfying: S₁/S₂≤0.9.

In the above-mentioned technical solutions, S₁/S₂≤0.9, the average grain size of the weak region is greatly different from the average grain size of the non-weak region, the average grain size of the weak region is reduced, and the mechanical properties of the material of the weak region are improved, thereby improving the toughness and fatigue resistance of the weak region, reducing the risk of damage to the weak region under normal usage conditions of the battery cell, and improving the service life of the battery cell.

In some embodiments, S₁/S₂≥0.05. When S₁/S₂ is too small, it is more difficult to form the weak region, the weak region has too large strength, it is more difficult for the weak region to be damaged during thermal runaway of the battery cell, and it is easy to fail in timely pressure relief. Therefore, S₁/S₂≥0.05 reduces the difficulty in forming the weak region, and improves the timeliness of pressure relief during thermal runaway of the battery cell.

In some embodiments, 0.1≤S₁/S₂≤0.5. This makes the overall performance of the shell component better, and ensures that the weak region has sufficient strength under normal usage conditions of the battery cell, while ensuring that the weak region can be promptly damaged during thermal runaway of the battery cell.

In some embodiments, 0.4 µm≤S₁≤75 µm. When S₁ is too large, the weak region has poor toughness and fatigue resistance. When S₁ is too small, it is difficult to form the weak region, the weak region has too large strength, it is more difficult for the weak region to be damaged during thermal runaway of the battery cell, and it is easy to fail in timely pressure relief. Therefore, 0.4 µm≤S₁≤75 µm, on the one hand, reduces the difficulty in forming the weak region and improves the timeliness of pressure relief during thermal runaway of the battery cell; and on the other hand, improves the toughness and fatigue resistance of the weak region, and reduces the risk of damage to the weak region under normal usage conditions of the battery cell.

In some embodiments, 1 µm≤S₁≤10 µm. This makes the overall performance of the shell component better, and ensures that the weak region has sufficient strength under normal usage conditions of the battery cell, while ensuring that the weak region can be promptly damaged during thermal runaway of the battery cell.

In some embodiments, 10 µm≤S₂≤150 µm.

In some embodiments, 30 µm≤S₂≤100 µm.

In some embodiments, the smallest thickness of the weak region is A, satisfying: 1≤A/S₁≤100. When A/S₁ is too small, in a thickness direction of the weak region, the number of grain layers in the weak region is too small, and the weak region has too small fatigue resistance. When A/S₁ is too large, in the thickness direction of the weak region, the number of grain layers in the weak region is too large, the weak region has too large strength, and there are risks for failure to promptly damage the weak region during thermal runaway of the battery cell. Therefore, 1≤A/S₁≤100, on the one hand, enables the weak region to have a large number of grain layers in the thickness direction, improves the fatigue resistance of the weak region, and reduces the risk of damage to the weak region under normal usage conditions of the battery cell; and on the other hand, enables the weak region to be more promptly damaged during thermal runaway of the battery cell, to achieve the purpose of timely pressure relief.

In some embodiments, 5≤A/S₁≤20. This makes the overall performance of the shell component better, ensures that the weak region has sufficient fatigue resistance under normal usage conditions of the battery cell, while ensuring that the weak region can be promptly damaged during thermal runaway of the battery cell, and improves the service life of the battery cell.

In some embodiments, the smallest thickness of the weak region is A, and the hardness of the weak region is H₁, satisfying: 5 HBW/mm≤H₁/A≤10000 HBW/mm. Not only is the impact of the thickness of the weak region on the performance of the shell component considered, but also the impact of the hardness of the weak region on the performance of the shell component is considered. 5 HBW/mm≤H₁/A≤10000 HBW/mm not only can enable the weak region to have sufficient strength under normal usage conditions of the battery cell, so that the weak region is not easily damaged due to fatigue, thus extending the service life of the battery cell; but also can enable the shell component to promptly release pressure through the weak region during thermal runaway of the battery cell, reduce the risks of explosion of the battery cell, and improve the safety of the battery cell.

In some embodiments, 190 HBW/mm≤H₁/A≤4000 HBW/mm. This makes the overall performance of the shell component better, ensures that the weak region has sufficient strength under normal usage conditions of the battery cell, while ensuring that the weak region can be promptly damaged during thermal runaway of the battery cell, and improves the service life of the battery cell on the premise of ensuring the safety of the battery cell.

In some embodiments, 0.02 mm≤A≤1.6 mm. When A is too small, it is difficult to form the weak region, and the weak region can be easily damaged in the forming process. When A is too large, it is more difficult for the weak region to be damaged during thermal runaway of the battery cell, and it is easy to fail in timely pressure relief. Therefore, 0.02 mm≤A≤1.6 mm improves the timeliness of pressure relief during thermal runaway of the battery cell, while reducing the difficulty in forming the pressure relief region.

In some embodiments, 0.06 mm≤A≤0.4 mm. This further reduces the difficulty in forming the pressure relief region, and improves the timeliness of pressure relief during thermal runaway of the battery cell.

In some embodiments, the hardness of the weak region is H₁, and the hardness of the non-weak region is H₂, satisfying: H₁>H₂. This is equivalent to increasing the hardness of the weak region, thereby increasing the strength of the weak region, and reducing the risk of damage to the weak region under normal usage conditions of the battery cell.

In some embodiments, H₁/H₂≤5. If H₁/H₂ is too large, it may be very difficult for the weak region to be damaged during thermal runaway of the battery cell. Therefore, H₁/H₂≤5 reduces the risks for failure to promptly damage the weak region during thermal runaway of the battery cell, and improves the safety of the battery cell.

In some embodiments, H₁/H₂≤2.5.

In some embodiments, 5 HBW≤H₂≤150 HBW.

In some embodiments, 5 HBW≤H₁≤200 HBW.

In some embodiments, the smallest thickness of the weak region is A, and the smallest thickness of the non-weak region is B, satisfying: 0.05≤A/B≤0.95. When A/B is too small, the weak region may have insufficient strength. When A/B is too large, the weak region may not be easily damaged during thermal runaway of the battery cell, thereby failing in timely pressure relief, and increasing the probability of explosion of the battery cell. Therefore, 0.05≤A/B≤0.95 not only can reduce the probability of rupture of the weak region under normal usage conditions of the battery cell, but also can reduce the probability of explosion during thermal runaway of the battery cell.

In some embodiments, 0.12≤A/B≤0.8. This makes the overall performance of an external component better, and ensures that the weak region has sufficient strength under normal usage conditions of the battery cell, while ensuring that the weak region can be promptly damaged during thermal runaway of the battery cell.

In some embodiments, 0.2≤A/B≤0.5.

In some embodiments, 0.02 mm≤A≤1.6 mm.

In some embodiments, 0.06 mm≤A≤0.4 mm.

In some embodiments, 1 mm≤B≤5 mm. When B is too large, the non-weak region has a large thickness, and more materials are used for the shell component, so that the shell component has a large weight and is less inexpensive. When B is too small, the non-weak region has a small thickness, and the shell component has poor deformation resistance. Therefore, 1 mm≤B≤5 mm makes the shell component inexpensive and have good deformation resistance.

In some embodiments, 1.2 mm≤B≤3.5 mm. This makes the shell component more inexpensive and have better deformation resistance.

In some embodiments, 2 mm≤B≤3 mm.

In some embodiments, the shell component comprises a pressure relief region, the groove portion comprises a score groove, the score groove is arranged along an edge of the pressure relief region, the pressure relief region is configured to be openable with the score groove as a boundary, and the weak region forms the bottom of the score groove. When the weak region is damaged, the pressure relief region can be opened with the weak region as the boundary, to achieve pressure relief, thereby increasing the pressure relief area of the shell component.

In some embodiments, the shell component comprises a first surface and a second surface that are oppositely arranged, and the score groove is recessed from the first surface toward a direction close to the second surface. The score groove is the groove portion with a simple structure. During forming, the score groove can be formed on the first surface, which is simple forming, improves the production efficiency, and reduces the production costs.

In some embodiments, the shell component comprises a first surface and a second surface that are oppositely arranged, the groove portion comprises multiple score grooves, the multiple score grooves are sequentially arranged on the shell component along a direction from the first surface to the second surface, and the weak region is formed at the bottom of the score groove farthest from the first surface; wherein the shell component comprises a pressure relief region, each of the score grooves is arranged along an edge of the pressure relief region, and the pressure relief region is configured to be openable with the score groove farthest from the first surface as a boundary. During forming, multiple score grooves may be formed stagewise on the shell component, which can reduce a forming depth of each score groove, thereby reducing a forming force experienced by the shell component when each score groove is formed, and reducing the risks of cracking of the shell component, so that the shell component is less likely to fail due to cracking at a position where the score groove is arranged, thus extending the service life of the shell component.

In some embodiments, the score groove farthest from the second surface is recessed from the first surface toward a direction close to the second surface. The groove portion is composed of multiple score grooves, and during forming, the multiple score grooves may be gradually processed in a direction from the first surface to the second surface.

In some embodiments, the shell component comprises a first surface and a second surface that are oppositely arranged, the groove portion further comprises a sunk groove, the sunk groove is recessed from the first surface toward a direction close to the second surface, and the pressure relief region is formed on a groove bottom wall of the sunk groove. The arrangement of the sunk groove can reduce the depth of the score groove while ensuring a constant thickness of the final weak region, thereby reducing the forming force experienced by the shell component when the score groove is formed, and reducing the risks of cracking of the shell component. In addition, the sunk groove can provide an avoidance space for the pressure relief region in an opening process. Even if the first surface is shielded by an obstacle, the pressure relief region can still be opened for pressure relief.

In some embodiments, the shell component comprises a first surface and a second surface that are oppositely arranged, the groove portion further comprises multiple sunk grooves, the multiple sunk grooves are sequentially arranged on the shell component along a direction from the first surface to the second surface, the sunk groove farthest from the second surface is recessed from the first surface toward a direction close to the second surface, and the pressure relief region is formed on a groove bottom wall of the sunk groove farthest from the first surface. During forming of the multiple sunk grooves, the forming depth of each sunk groove can be reduced, the forming force experienced by the shell component when each sunk groove is formed can be reduced, and the risks of cracking of the shell component can be reduced. **In** addition, the multiple sunk grooves can provide an avoidance space for the pressure relief region in an opening process. Even if the first surface is shielded by an obstacle, the pressure relief region can still be opened for pressure relief.

In some embodiments, an internal space of the sunk groove is a cylinder, a prismoid, a frustum of a cone, or a frustum of a prism. This structure of the sunk groove is simple, can be easily formed, and can provide more avoidance space for the pressure relief region in the opening process.

In some embodiments, the score groove comprises a first groove segment and a second groove segment, the first groove segment intersects with the second groove segment, and the first groove segment and the second groove segment are arranged along the edge of the pressure relief region. The stress is more concentrated at an intersection position of the first groove segment and the second groove segment, so that the weak region can be first damaged at the intersection position of the first groove segment and the second groove segment. At a constant detonation pressure of the battery cell, the weak region can be made thicker to reduce the forming depth of the score groove.

In some embodiments, the score groove further comprises a third groove segment, the first groove segment and the third groove segment are oppositely arranged, the second groove segment intersects with the third groove segment, and the first groove segment, the second groove segment, and the third groove segment are arranged along the edge of the pressure relief region. In this way, the pressure relief region can be opened with the first groove segment, the second groove segment, and the third groove segment as boundaries. During pressure relief of the battery cell, the pressure relief region can be opened more easily, thereby realizing large-area pressure relief of the shell component.

In some embodiments, the first groove segment, the second groove segment, and the third groove segment are sequentially connected, and the first groove segment, the second groove segment, and the third groove segment define one said pressure relief region.

In some embodiments, the first groove segment, the second groove segment, and the third groove segment define two said pressure relief regions, and the two pressure relief regions are located on both sides of the second groove segment respectively. The two pressure relief regions can be opened in folio for pressure relief, which can effectively improve the pressure relief efficiency of the shell component.

In some embodiments, the score groove is a groove extending along a non-closed trajectory. The pressure relief region can be opened by flipping. After being opened, the pressure relief region is finally connected to other regions of the shell component, thus reducing the risks of splashing after the pressure relief region is opened.

In some embodiments, the score groove is a circular arc groove. The circular arc groove has a simple structure and can be easily formed. In the pressure relief process, the pressure relief region can quickly rupture along the circular arc groove, to quickly open the pressure relief region.

In some embodiments, the score groove is a groove extending along a closed trajectory. In the pressure relief process, the shell component can rupture along the score groove, so that the pressure relief region can be opened in a detached manner, thereby increasing the pressure relief area of the shell component, and improving the pressure relief rate of the shell component.

In some embodiments, the score groove is an annular groove. The annular groove has a simple structure, and can be easily formed. In the pressure relief process, the shell component can quickly rupture along the annular groove, to quickly open the pressure relief region.

In some embodiments, an area of the pressure relief region is D, satisfying: 90 mm²≤D≤1500 mm². When D is too small, the shell component has a small pressure relief area, and the pressure relief during thermal runaway of the battery cell is less prompt. When D is too large, the pressure relief region has poor impact resistance, the deformation of the pressure relief region subjected to a force is increased, and the weak region can be easily damaged under normal usage conditions of the battery cell, thus affecting the service life of the battery cell. Therefore, 90 mm²≤D≤1500 mm² not only can extend the service life of the battery cell, but also can improve the safety of the battery cell.

In some embodiments, 150 mm²≤D≤1200 mm².

In some embodiments, 200 mm²≤D≤1000 mm².

In some embodiments, 250 mm²≤D≤800 mm².

In some embodiments, the shell component comprises the first surface and the second surface that are oppositely arranged, the groove portion is recessed from the first surface toward a direction close to the second surface, the groove portion forms an outer edge on the first surface, and a region of the shell component beyond a preset distance from the outer edge is the non-weak region. In this way, the non-weak region is less susceptible to the influence of the process of forming the groove portion, so that grains in the non-weak region are more uniform.

In some embodiments, the preset distance is L, satisfying: L=5mm.

In some embodiments, the shell component further comprises a transition region, the transition region connects the weak region to the non-weak region, and an average grain size of the transition region is S₃, satisfying: S₃≤S₂. The transition region functions to connect the weak region to the non-weak region, so that the weak region and the non-weak region are integrally formed.

In some embodiments, the shell component is an end cover, the end cover is configured to close an opening of a case, and the case is configured to accommodate an electrode assembly. The end cover has a pressure relief function, to ensure the safety of the battery cell.

In some embodiments, the shell component is a case, the case comprises an opening, and the case is configured to accommodate an electrode assembly, so that the case has a pressure relief function, to ensure the safety of the battery cell.

In some embodiments, the case comprises a plurality of integrally formed wall portions, the plurality of wall portions jointly define an internal space of the case, and at least one of the wall portions is provided with the groove portion. The plurality of wall portions are integrally formed, so that the wall portion provided with the groove portion has better reliability.

In some embodiments, the plurality of wall portions comprise a bottom wall and a plurality of side walls arranged around the bottom wall, the case is formed with an opening at one end opposite to the bottom wall; the bottom wall is provided with the groove portion; and/or, at least one of the side walls is provided with the groove portion.

In some embodiments, the case is a cuboid, is adapted to a square battery cell, and can satisfy the requirements of the battery cell for large capacity.

In some embodiments, the material of the shell component includes an aluminum alloy. The aluminum alloy shell component is light in weight, has good ductility, and can be easily formed.

In some embodiments, the aluminum alloy comprises components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%. This aluminum alloy has lower hardness and better forming ability, thereby reducing the difficulty in forming the groove portion, improving the forming accuracy of the groove portion, and improving the pressure relief consistency of the shell component.

In some embodiments, the aluminum alloy comprises components at percentage mass contents of: aluminum≥96.7%, 0.05%≤copper≤0.2%, iron≤0.7%, manganese≤1.5%, silicon≤0.6%, zinc≤0.1%, components of other individual elements≤0.05%, and total components of other elements≤0.15%. The shell component made of this aluminum alloy has higher hardness, high strength, and good damage resistance.

In a second aspect, an embodiment of the present application provides a battery cell, comprising the shell component provided in any one embodiment of the above first aspect.

In some embodiments, the battery cell further comprises a case, the case comprises an opening, the case is configured to accommodate an electrode assembly; the shell component is an end cover, and the end cover closes the opening.

In some embodiments, the shell component is a case, the case comprises an opening, the case is configured to accommodate an electrode assembly; the battery cell further comprises an end cover, and the end cover closes the opening.

In a third aspect, an embodiment of the present application provides a battery, comprising the battery cell provided in any one embodiment of the above second aspect.

In some embodiments, the weak region is located in a lower part of the battery cell. In a service process of the battery, under the gravity of the electrode assembly, an electrolyte solution, and the like inside the battery cell, the weak region is subjected to a great force. As an integrally formed structure, the weak region and the non-weak region have a good structural strength and better reliability, thereby improving the service life of the battery cell.

In some embodiments, the battery cell comprises a case, the case is configured to accommodate an electrode assembly, the case comprises a bottom wall and a plurality of side walls arranged around the bottom wall, the bottom wall and the side walls are integrally formed, the case is formed with an opening at one end opposite to the bottom wall, and the weak region is located on the bottom wall.

In some embodiments, the battery cell comprises an end cover, the end cover is configured to close an opening of the case, the case is configured to accommodate an electrode assembly, and the weak region is located on the end cover.

In a fourth aspect, an embodiment of the present application provides an electrical device, comprising the battery provided in any one embodiment of the above third aspect.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is a schematic structural diagram of a shell component provided in some embodiments of the present application;
FIG. 5 is a section view C-C of the shell component shown in FIG. 4;
FIG. 6 is a grain diagram (schematic diagram) of the shell component shown in FIG. 5;
FIG. 7 is a partial enlarged view E of the shell component shown in FIG. 5;
FIG. 8 is a partial enlarged view of a shell component provided in some other embodiments of the present application;
FIG. 9 is a schematic structural diagram of a shell component provided in some other embodiments of the present application (showing a score groove);
FIG. 10 is a section view E-E of the shell component shown in FIG. 9;
FIG. 11 is a schematic structural diagram of a shell component provided in some other embodiments of the present application (showing a score groove);
FIG. 12 is a section view F-F of the shell component shown in FIG. 11;
FIG. 13 is a schematic structural diagram of a shell component provided in some other embodiments of the present application (showing a score groove);
FIG. 14 is a section view G-G of the shell component shown in FIG. 13;
FIG. 15 is a schematic structural diagram of a shell component provided in some other embodiments of the present application (showing two score grooves);
FIG. 16 is a section view K-K of the shell component shown in FIG. 15;
FIG. 17 is a schematic structural diagram of a shell component provided in some other embodiments of the present application (showing two score grooves);
FIG. 18 is a section view M-M of the shell component shown in FIG. 17;
FIG. 19 is a schematic structural diagram of a shell component provided in some other embodiments of the present application (showing two score grooves);
FIG. 20 is a section view N-N of the shell component shown in FIG. 19;
FIG. 21 is an axonometric view of a shell component provided in some embodiments of the present application;
FIG. 22 is a schematic structural diagram of the shell component shown in FIG. 21 (showing a score groove and a sunk groove);
FIG. 23 is a section view O-O of the shell component shown in FIG. 22;
FIG. 24 is a schematic structural diagram of a shell component provided in some other embodiments of the present application (showing a score groove and a sunk groove);
FIG. 25 is a section view P-P of the shell component shown in FIG. 24;
FIG. 26 is a schematic structural diagram of a shell component provided in some other embodiments of the present application (showing a score groove and a sunk groove);
FIG. 27 is a section view Q-Q of the shell component shown in FIG. 26;
FIG. 28 is a schematic structural diagram of a shell component provided in some embodiments of the present application (showing a score groove and two sunk grooves);
FIG. 29 is a section view R-R of the shell component shown in FIG. 28;
FIG. 30 is a schematic structural diagram of a shell component provided in some other embodiments of the present application (showing a score groove and two sunk grooves);
FIG. 31 is a section view S-S of the shell component shown in FIG. 30;
FIG. 32 is a schematic structural diagram of a shell component provided in some other embodiments of the present application (showing a score groove and two sunk grooves);
FIG. 33 is a section view T-T of the shell component shown in FIG. 32;
FIG. 34 is a schematic structural diagram of a shell component provided in some embodiments of the present application (showing a score groove, the score groove being V-shaped);
FIG. 35 is a schematic structural diagram of a shell component provided in other embodiments of the present application;
FIG. 36 is a grain diagram (schematic diagram) of a shell component provided in some other embodiments of the present application;
FIG. 37 is a schematic structural diagram of an end cover provided in some embodiments of the present application;
FIG. 38 is a schematic structural diagram of a case provided in some embodiments of the present application;
FIG. 39 is a schematic structural diagram of a case provided in some other embodiments of the present application; and
FIG. 40 is a schematic structural diagram of a battery cell provided in some embodiments of the present application.

Icons: 1-shell; 11-end cover; 12-case; 121-wall portion; 121a-side wall; 121b-bottom wall; 2-electrode assembly; 21-positive tab; 22-negative tab; 3-positive electrode terminal; 4-negative electrode terminal; 5-shell component; 51-non-weak region; 511-inner edge; 52-weak region; 53-groove portion; 531-groove bottom surface of groove portion; 532-score groove; 532a-outermost score groove; 532b-innermost score groove; 5321-first groove segment; 5322-second groove segment; 5323-third groove segment; 533-sunk groove; 533a-outermost sunk groove; 533b-innermost sunk groove; 5331-groove bottom wall of sunk groove; 534-outer edge; 54-first surface; 55-second surface; 56-pressure relief region; 57-transition region; 10-battery cell; 20-box body; 201-first part; 202-second part; 100-battery; 200-controller; 300-motor; 1000-vehicle; Y-mid-plane.

### DETAILED DESCRIPTION

For the objects, technical solutions, and advantages of the embodiments of the present application to be clearer, the technical solutions in the embodiments of the present application may be clearly and completely described below with reference to the drawings in the embodiments of the present application, and it is apparent that the described embodiments are a part of the embodiments of the present application rather than all the embodiments. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms such as "first" and "second" in the specification and the claims or the above drawings of the present application are used to distinguish between different objects, and are not used to describe a particular sequence or a primary-secondary relationship.

Reference to an "embodiment" in the present application means that a particular feature, structure, or property described with reference to the embodiment may be included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. **In** addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the dimensions such as the thickness, length, and width of various components in the embodiments of the present application shown in the drawings, as well as the dimensions such as the overall thickness, length, and width of the integrated apparatus are illustrative only and shall not constitute any limitation on the present application.

In the present application, the "plurality of" refers to more than two (including two).

In the embodiments of the present application, the battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium-sulfur battery, a magnesium-ion battery, a nickel-metal hydride battery, a nickel-cadmium battery, or a lead storage battery, etc., which is not limited in the embodiments of the present application.

The battery mentioned in the embodiments of the present application may be a single physical module including one or more battery cells to provide higher voltage and capacity. When there are a plurality of battery cells, the plurality of battery cells are connected by series connection, or parallel connection, or parallel-series connection through a bus component.

In some embodiments, the battery may be a battery module. When there are a plurality of battery cells, the plurality of battery cells are arranged and fixed to form a battery module.

In some embodiments, the battery may be a battery pack. The battery pack comprises a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, or an energy storage cabinet, etc.

For the development of battery technologies, various design factors should be considered, such as energy density, cycle life, discharge capacity, charging-discharging rate, and other performance parameters. In addition, the battery safety should also be considered.

In the battery cell, in order to ensure the safety of the battery cell, a pressure relief mechanism may be provided on a shell of the battery cell. During thermal runaway of the battery cell, an internal pressure of the battery cell is released through the pressure relief mechanism, to improve the safety of the battery cell.

For a general battery cell, the pressure relief mechanism is welded to the shell, to fix the pressure relief mechanism to the shell. The pressure relief mechanism is, for example, a rupture disk arranged on an end cover of the shell. During thermal runaway of the battery cell, the rupture disk is damaged to discharge emissions inside the battery cell, to achieve the purpose of releasing the internal pressure of the battery cell. Since the pressure relief mechanism is welded to the shell, a crack may appear at a welding position during long-term use of the battery cell, thereby reducing the strength at the welding position, and it is easy for the welding position to be damaged when the internal pressure of the battery cell fails to reach a detonation pressure of the pressure relief mechanism, thereby resulting in the pressure relief mechanism failure, and reducing the reliability of the pressure relief mechanism.

In order to improve the reliability of the pressure relief mechanism, the inventors found through researches that the pressure relief mechanism and the shell may be arranged as an integrally formed structure, that is, a part of the shell is used as the pressure relief mechanism. For example, the end cover is partially weakened, so that partial strength of the end cover is reduced to form a weak region, thereby forming an integrated pressure relief mechanism. In this way, the reliability of the pressure relief mechanism can be effectively improved.

The inventors noticed that after the integrated pressure relief mechanism is formed on the shell, the weak region of the shell has poor mechanical properties. Under normal usage conditions of the battery cell, the weak region is prone to fatigue damage due to long-term changes of the internal pressure of the battery cell, thereby affecting the service life of the battery cell.

In view of this, an embodiment of the present application provides a shell component. A groove portion is provided on the shell component, to form a non-weak region and a weak region that are integrally formed. The non-weak region is formed around the groove portion, the weak region is formed at the bottom of the groove portion, an average grain size of the weak region is S₁, an average grain size of the non-weak region is S₂, and S₁/S₂≤0.9.

In such a shell component, S₁/S₂≤0.9, reduces the average grain size of the weak region, and improves the mechanical properties of the material of the weak region, thereby improving the toughness and fatigue resistance of the weak region, reducing the risk of damage to the weak region under normal usage conditions of the battery cell, and improving the service life of the battery cell.

The technical solutions described in the embodiments of the present application are adapted to a battery and an electrical device using a battery.

The electrical device may be a vehicle, a mobile phone, a portable device, a laptop, a ship, a spacecraft, an electric toy, an electric tool, etc. The vehicle may be a fuel vehicle, a gas vehicle, or a new energy vehicle. The new energy vehicle may be, e.g., an all-electric vehicle, a hybrid electric vehicle, or an extended range electric vehicle. The spacecraft includes, e.g., an airplane, a rocket, a space shuttle, and a spaceship. The electric toy includes a fixed or mobile electric toy, such as a game machine, an electric toy car, an electric toy ship, and an electric toy plane. The electric tool includes an electric metal cutting tool, an electric grinding tool, an electric assembling tool, and an electric tool for railway, such as an electric drill, an electric grinding machine, an electric wrench, an electric screwdriver, an electric hammer, an electric impact drill, a concrete vibrator, and an electric planer. The electrical device is not specially limited in the embodiments of the present application.

For ease of description, in the following embodiments, the electrical device is, for example, a vehicle.

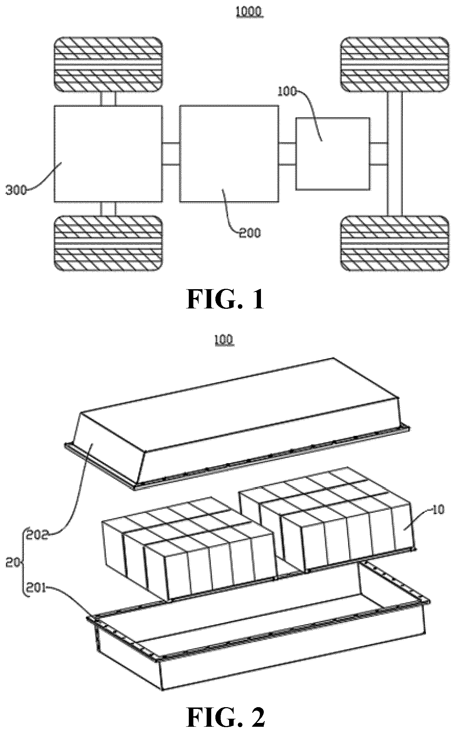

Referring to FIG. 1, FIG. 1 is a schematic structural diagram of a vehicle 1000 provided in some embodiments of the present application. A battery 100 is provided within the vehicle 1000. The battery 100 may be arranged at the bottom or head or tail of the vehicle 1000. The battery 100 may be used to supply power to the vehicle 1000. For example, the battery 100 may serve as an operating power source of the vehicle 1000.

The vehicle 1000 may further include a controller 200 and a motor 300. The controller 200 is configured to control the battery 100 to supply power to the motor 300, for example, serve to satisfy operating power demand when the vehicle 1000 is starting, navigating, and running.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to FIG. 2, FIG. 2 is an exploded view of a battery 100 provided in some embodiments of the present application. The battery 100 includes a battery cell 10 and a box body 20. The box body 20 is configured to accommodate the battery cell 10.

The box body 20 is a component that accommodates the battery cell 10. The box body 20 provides a placement space for the battery cell 10. A variety of structures may be used for the box body 20. In some embodiments, the box body 20 may comprise a first part 201 and a second part 202. The first part 201 and the second part 202 cover each other, to define a placement space for accommodating the battery cell 10. The first part 201 and the second part 202 may be of various shapes, such as a cuboid and a cylinder. The first part 201 may be a unilaterally open hollow structure, and the second part 202 may also be a unilaterally open hollow structure. The open side of the second part 202 covers on the open side of the first part 201 to form the box body 20 with the placement space. Alternatively, the first part 201 may be a unilaterally open hollow structure, and the second part 202 may be a platy structure. The second part 202 covers on the open side of the first part 201 to form the box body 20 with the placement space. As an example, the battery cell 10 may be a cylindrical battery cell, a prismatic battery cell, a pouch cell, or a battery cell 10 of other shapes. The prismatic battery cell includes a battery cell of a square shell, a blade-shaped battery cell, and a polygon prism-shaped battery. The polygon prism-shaped battery is, for example, a hexagonal prism-shaped battery, etc., which is not particularly limited in the present application.

In the battery 100, the number of battery cells 10 may be one, or may be more. If there are a plurality of battery cells 10, there may be series connection, or parallel connection, or parallel-series connection among the plurality of battery cells 10. The parallel-series connection means that there are both series connection and parallel connection among the plurality of battery cells 10. The plurality of battery cells 10 may first form a battery module by series connection, or parallel connection, or parallel-series connection. Then, a plurality of battery modules may form an integral whole by series connection, or parallel connection, or parallel-series connection, and be accommodated in the box body 20. Alternatively, all of the battery cells 10 may be directly connected together by series connection, or parallel connection, or parallel-series connection, and then the integral whole formed by all of the battery cells 10 is accommodated within the box body 20.

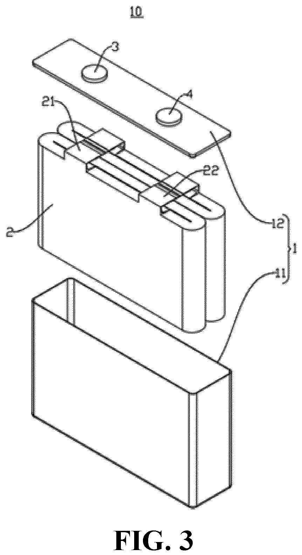

Referring to FIG. 3, FIG. 3 is an exploded view of a battery cell 10 provided in some embodiments of the present application. The battery cell 10 may include a shell 1 and an electrode assembly 2.

The shell 1 is configured to accommodate components, such as the electrode assembly 2 and an electrolyte. The shell 1 may be a steel shell, an aluminum shell, a plastic shell (e.g., polypropylene), a composite metal shell (e.g., a copper-aluminum composite shell), or an aluminum-plastic film, etc. As an example, the shell 1 may include a case 12 and an end cover 11.

The case 12 may be a hollow structure with an opening formed at one end, or the case 12 may be a hollow structure with openings formed at two opposite ends. The case 12 may be made of various materials, such as copper, iron, aluminum, steel, or aluminum alloy.

The end cover 11 is a component that closes the opening of the case 12 to isolate the internal environment of the battery cell 10 from the external environment. The end cover 11 and the case 12 jointly define an accommodation space for accommodating the electrode assembly 2, an electrolyte solution, and other components. The end cover 11 may be connected to the case 12 by welding or winded sealing, to close the opening of the case 12. The shape of the end cover 11 may match the shape of the shell 1. For example, the case 12 has a cuboid structure, and the end cover 11 has a rectangular platy structure matching the shell 1. For another example, the case 12 is a cylinder, and the end cover 11 is a round platy structure matching the case 12. The end cover 11 may also be made of various materials, such as copper, iron, aluminum, steel, or aluminum alloy.

In the battery cell 10, the number of end covers 11 may be one, or may be two. In an embodiment where the case 12 is a hollow structure with openings formed at both ends, two end covers 11 may be provided correspondingly. The two end covers 11 close the two openings of the case 12 respectively. The two end covers 11 and the case 12 jointly define the accommodation space. In an embodiment where the case 12 is a hollow structure with an opening formed at one end, one end cover 11 may be provided correspondingly. The end cover 11 closes the opening at one end of the case 12. The end cover 11 and the case 12 jointly define the accommodation space.

The electrode assembly 2 comprises a positive electrode, a negative electrode, and a spacer. During charging and discharging of the battery cell 10, active ions (e.g., lithium ions) are intercalated and de-intercalated back and forth between the positive electrode and the negative electrode. The spacer is arranged between the positive electrode and the negative electrode, and can function to prevent a short circuit between the positive electrode and the negative electrode, while allowing active ions to pass through.

In some embodiments, the positive electrode may be a positive electrode plate, and the positive electrode plate may comprise a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. As an example, a lithium source material, a potassium metal, or a sodium metal may also be filled or/and deposited in the foam metal, and the lithium source material is a lithium metal and/or a lithium-rich material.

In some embodiments, the negative electrode may be a negative electrode plate, and the negative electrode plate may include a negative electrode current collector and a negative electrode active material arranged on at least one surface of the negative electrode current collector.

As an example, the negative electrode current collector has two surfaces opposite in its own thickness direction, and the negative electrode active material is arranged on either one or both of the two opposite surfaces of the negative electrode current collector.

As an example, a metal foil or a composite current collector may be used as the negative electrode current collector. For example, silver surface-treated aluminum or stainless steel, stainless steel, copper, aluminum, nickel, carbon electrode, use carbon, nickel, titanium, or the like may be used as the metal foil. The composite current collector may include a high molecular material substrate layer and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, a negative electrode active material for a battery well-known in the art may be used as the positive electrode active material. As an example, the negative electrode active material may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, a foam metal may be used as the negative electrode. The foam metal may be foam nickel, foam copper, foam aluminum, foam alloy, or foam carbon, etc. When the foam metal is used as the negative electrode plate, the surface of the foam metal may not be provided with a negative electrode active material, and of course, may also be provided with a negative electrode active material.

As an example, a lithium source material, a potassium metal, or a sodium metal may also be filled or/and deposited in the negative electrode current collector, and the lithium source material is a lithium metal and/or a lithium-rich material.

In some embodiments, the material of the positive electrode current collector may be aluminum, and the material of the negative electrode current collector may be copper.

In some embodiments, the electrode assembly 2 further comprises the spacer arranged between the positive electrode and the negative electrode.

In some embodiments, the spacer is a separator. The type of the separator is not particularly limited in the present application, and any well-known separator having good chemical stability, mechanical stability, and a porous structure may be selected.

As an example, the main material of the separator may be selected from at least one of glass fiber, non-woven fabric, polyethylene, polypropylene, polyvinylidene fluoride, and ceramic. The separator may be a single-layer film, or may be a multi-layer composite film, which is not particularly limited. When the separator is a multi-layer composite film, the material in each layer may be same or different, which is not particularly limited. The spacer may be a separate component located between the positive electrode and the negative electrode, or may be attached to the surface of the positive electrode and the surface of the negative electrode.

In some embodiments, the spacer is a solid electrolyte. The solid electrolyte is arranged between the positive electrode and the negative electrode, and functions to transport ions and isolate the positive electrode from the negative electrode.

In some embodiments, the battery cell 10 further comprises an electrolyte that functions to conduct ions between the positive electrode and the negative electrode. The type of the electrolyte is not specifically limited in the present application, and can be selected according to requirements. The electrolyte may be in a liquid state, a gel state, or a solid state.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoro arsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. An ether solvent may also be used as the solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, or cellulose, etc.

As an example, the inorganic solid electrolyte may be one or more of an oxide solid electrolyte (crystalline perovskite, sodium superconductive ionic conductor, garnet, amorphous LiPON film), a sulfide solid electrolyte (crystalline lithium superionic conductor (lithium germanium phosphorus sulfur, sulfide silver germanium ore), amorphous sulfide), a halide solid electrolyte, a nitride solid electrolyte, and a hydride solid electrolyte.

As an example, a composite solid electrolyte is formed by adding an inorganic solid electrolyte filler into a polymer solid electrolyte.

In some embodiments, the electrode assembly 2 is a winding structure. The positive electrode plate and the negative electrode plate are winded into a winding structure.

In some embodiments, the electrode assembly 2 is a stacked structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

As an example, the spacer can be continuously arranged between any adjacent positive electrode plates or negative electrode plates by folding or winding.

In some embodiments, the shape of the electrode assembly 2 may be a cylinder, flat, or a polygon prism, etc.

In some embodiments, the electrode assembly 2 is provided with tabs that can conduct current out from the electrode assembly 2. The tabs include a positive tab 21 and a negative tab 22.

The battery cell 10 may further comprise an electrode terminal, which may be arranged on the shell 1, and is configured to be electrically connected to the tabs of the electrode assembly 2 to output electrical energy of the battery cell 10. The electrode terminal may be directly connected to the tabs, for example, the electrode terminal is directly welded to the tabs. The electrode terminal may also be indirectly connected to the tabs. For example, the electrode terminal is indirectly connected to the tabs through a current collecting member. The current collecting member may be a metal conductor, such as copper, iron, aluminum, steel, or aluminum alloy, etc.

As shown in FIG. 3, the case 12 is, for example, a hollow structure with an opening formed at one end, and two electrode terminals may be provided on the end cover 11. The two electrode terminals are a positive electrode terminal 3 and a negative electrode terminal 4 respectively. The positive electrode terminal 3 is electrically connected to the positive tab 21, and the negative electrode terminal 4 is electrically connected to the negative tab 22.

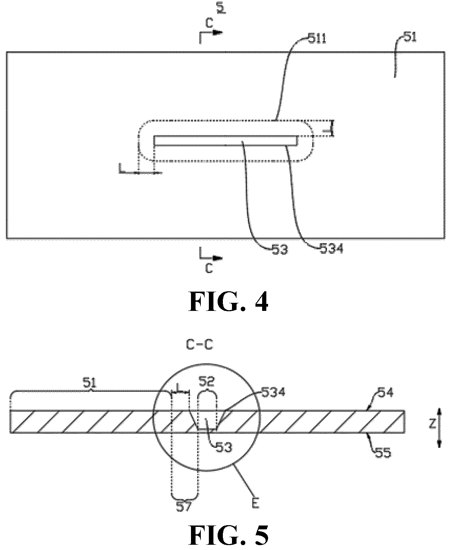

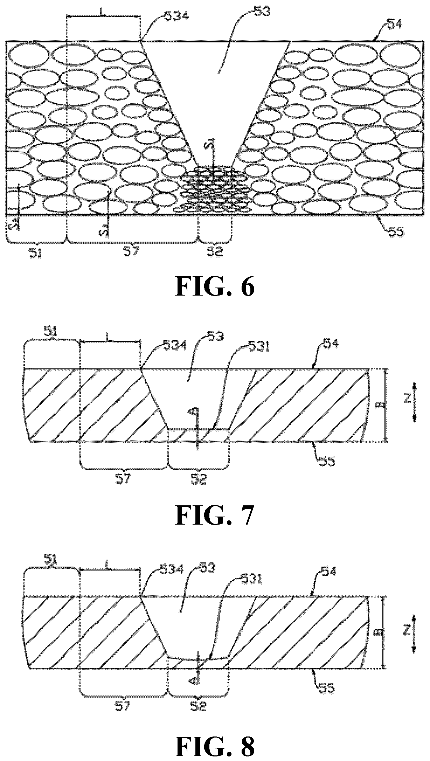

Referring to FIGS. 4-7, FIG. 4 is a schematic structural diagram of a shell component 5 provided in some embodiments of the present application; FIG. 5 is a section view C-C of the shell component 5 shown in FIG. 4; FIG. 6 is a grain diagram (schematic diagram) of the shell component 5 shown in FIG. 5; and FIG. 7 is a partial enlarged view E of the shell component 5 shown in FIG. 5. An embodiment of the present application provides a shell component 5 for a battery cell 10, comprising a non-weak region 51 and a weak region 52 that are integrally formed, the shell component 5 is provided with a groove portion 53, the non-weak region 51 is formed around the groove portion 53, the weak region 52 is formed at the bottom of the groove portion 53, and the weak region 52 is configured to be damaged when an internal pressure of the battery cell 10 is released. An average grain size of the weak region 52 is S₁, and an average grain size of the non-weak region 51 is S₂, satisfying: S₁/S₂≤0.9.

The shell component 5 is a component that can accommodate the electrode assembly 2 together with other components. The shell component 5 is a part of a shell 1. An end cover 11 of the shell 1 may be the shell component 5, or a case 12 of the shell 1 may be the shell component 5. The shell component 5 may be made of a metal material, such as copper, iron, aluminum, steel, or aluminum alloy, etc. The shell component 5 may be an aluminum plastic film.

The weak region 52 is a part of the shell component 5 weaker than other regions. When the internal pressure of the battery cell 10 reaches a threshold, the weak region 52 of the shell component 5 can be damaged to release the internal pressure of the battery cell 10. The weak region 52 can be damaged in the form of rupture, or detachment, etc. For example, when the internal pressure of the battery cell 10 reaches a threshold, the weak region 52 ruptures under the action of emissions (gas, or electrolyte solution, etc.) inside the battery cell 10, so that the emissions inside the battery cell 10 can be discharged smoothly. The weak region 52 may be in various shapes, such as rectangle, round, ellipse, annulus, circular arc, U-shape, or H-shape, etc. The thickness of the weak region 52 may be uniform, or may be non-uniform.

The weak region 52 is formed at the bottom of the groove portion 53. The groove portion 53 may be formed in a variety of ways. For example, the groove portion 53 may be formed by stamping, milling, laser etching, or other forming methods, to integrally form the weak region 52 and the non-weak region 51. After the groove portion 53 is formed by stamping on the shell component 5, the shell component 5 is thinned in a region where the groove portion 53 is arranged, correspondingly forming the weak region 52. The groove portion 53 may be one groove. Along a depth direction of the groove portion 53, a groove side wall of the groove portion 53 is continuous. For example, the groove portion 53 is a groove with an internal space assuming a cuboid, a column, or the like. The groove portion 53 may also be multiple grooves. The multiple grooves are arranged along the depth direction of the groove portion 53. Among two adjacent grooves, a groove on an inner side (at a deeper position) is provided on a groove bottom surface of a groove on an outer side (at a shallower position), for example, the groove portion 53 is stepped grooves. During forming, the multiple grooves may be formed by stamping stagewise along the depth direction of the groove portion 53, and the weak region 52 is formed at the bottom of a groove located at a deepest (innermost) position among the multiple grooves.

The non-weak region 51 is formed around the groove portion 53. The strength of the non-weak region 51 is greater than the strength of the weak region 52. The weak region 52 can be more easily damaged than the non-weak region 51. When the groove portion 53 is formed by stamping on the shell component 5, the non-weak region 51 may be an unstamped part of the shell component 5. The thickness of the non-weak region 51 may be uniform, or may be non-uniform.

The critical point method in GB 6394-2017 may be referred to for the measurement method of the average grain size, which will not be repeated here. The average grain size of the weak region 52 may be measured along a thickness direction of the weak region 52; and the average grain size of the non-weak region 51 may be measured along a thickness direction of the non-weak region 51.

In FIG. 5, the thickness direction of the weak region 52 is consistent with the thickness direction of the non-weak region 51, and both are Z direction.

S₁/S₂ may be any one point value among 0.01, 0.03, 0.04, 0.05, 0.1, 0.15, 0.2, 0.25, 0.3, 0.35, 0.4, 0.45, 0.5, 0.55, 0.6, 0.65, 0.7, 0.75, 0.8, 0.85, or 0.9, or a range value between any two thereof.

In an embodiment of the present application, the weak region 52 and the non-weak region 51 are integrally formed, so that the shell component 5 has higher reliability. Since S₁/S₂≤0.9, the average grain size of the weak region 52 is greatly different from the average grain size of the non-weak region 51, and the average grain size of the weak region 52 is reduced to achieve the purpose of fining grains in the weak region 52, thereby improving the mechanical properties of the material of the weak region 52, improving the toughness and fatigue resistance of the weak region 52, reducing the risk of damage to the weak region 52 under normal usage conditions of the battery cell 10, and improving the service life of the battery cell 10.

In some embodiments, S₁/S₂≥0.05.

The inventors noticed that when S₁/S₂<0.05, it is more difficult to form the weak region 52, the weak region 52 has too large strength, it is more difficult for the weak region 52 to be damaged during thermal runaway of the battery cell 10, and it is easy to fail in timely pressure relief.

Therefore, S₁/S₂≥0.05 reduces the difficulty in forming the weak region 52, and improves the timeliness of pressure relief during thermal runaway of the battery cell 10.

In some embodiments, 0.1≤S₁/S₂≤0.5.

S₁/S₂ may be any one point value among 0.1, 0.12, 0.15, 0.17, 0.2, 0.22, 0.25, 0.27, 0.3, 0.32, 0.35, 0.37, 0.4, 0.42, 0.45, 0.47, or 0.5, or a range value between any two thereof.

In the present embodiment, 0.1≤S₁/S₂≤0.5 makes the overall performance of the shell component 5 better, and ensures that the weak region 52 has sufficient strength under normal usage conditions of the battery cell 10, while ensuring that the weak region 52 can be promptly damaged during thermal runaway of the battery cell 10.

In some embodiments, 0.4 µm≤S₁≤75 µm.

S₁ may be any one point value among 0.4 µm, 0.5 µm, 1 µm, 2 µm, 3 µm, 4 µm, 5 µm, 10 µm, 15 µm, 20 µm, 25 µm, 28 µm, 30 µm, 35 µm, 36 µm, 40 µm, 45 µm, 49 µm, 50 µm, 55 µm, 60 µm, 65 µm, 70 µm, 72 µm, or 75 µm, or a range value between any two thereof.

The inventors noticed that when S₁>75 µm, the weak region 52 has poor toughness and fatigue resistance; and when S₁<0.4 mm, it is difficult to form the weak region 52, the weak region 52 has too large strength, it is more difficult for the weak region 52 to be damaged during thermal runaway of the battery cell 10, and it is easy to fail in timely pressure relief.

Therefore, 0.1 µm≤S₁≤75 µm, on the one hand, reduces the difficulty in forming the weak region 52 and improves the timeliness of pressure relief during thermal runaway of the battery cell 10; and on the other hand, improves the toughness and fatigue resistance of the weak region 52, and reduces the risk of damage to the weak region 52 under normal usage conditions of the battery cell 10.

In some embodiments, 1 µm≤S₁≤10 µm.

S₁ may be any one point value among 1 µm, 1.5 µm, 1.6 µm, 2 µm, 2.5 µm, 2.6 µm, 3 µm, 3.5 µm, 3.6 µm, 4 µm, 4.5 µm, 4.6 µm, 5 µm, 5.5 µm, 5.6 µm, 6 µm, 6.5 µm, 6.6 µm, 7 µm, 7.5 µm, 7.6 µm, 8 µm, 8.5 µm, 8.6 µm, 9 µm, 9.5 µm, 9.6 µm, or 10 µm, or a range value between any two thereof.

In the present embodiment, 1 µm≤S₁≤10 µm makes the overall performance of the shell component 5 better, and ensures that the weak region 52 has sufficient strength under normal usage conditions of the battery cell 10, while ensuring that the weak region 52 can be promptly damaged during thermal runaway of the battery cell 10.

In some embodiments, 10 µm≤S₂≤150 µm.

S₂ may be any one point value among 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm, or a range value between any two thereof.

In some embodiments, 30 µm≤S₂≤100 µm.

S₂ may be any one point value among 30 µm, 32 µm, 35 µm, 37 µm, 40 µm, 42 µm, 45 µm, 47 µm, 50 µm, 52µm, 55 µm, 57 µm, 60 µm, 62 µm, 65 µm, 67 µm, 70 µm, 72 µm, 75 µm, 77 µm, 80 µm, 82 µm, 85 µm, 87 µm, 90 µm, 92 µm, 95 µm, 97µm, or 100 µm, or a range value between any two thereof.

In some embodiments, the smallest thickness of the weak region 52 is A, satisfying: 1≤A/S₁≤100.

A/S₁ may be any one point value among 1, 2, 4, 5, 10, 15, 20, 21, 22, 23, 25, 30, 33, 34, 35, 37, 38, 40, 45, 50, 55, 60, 65, 70, 75, 80, 85, 90, 93, 94, 95, or 100, or a range value between any two thereof.

When A/S₁<1, in a thickness direction of the weak region 52, the number of grain layers in the weak region 52 is too small, and the weak region 52 has too small fatigue resistance. When A/S₁>100, in the thickness direction of the weak region 52, the number of grain layers in the weak region 52 is too large, the weak region 52 has too large strength, and there are risks for failure to promptly damage the weak region 52 during thermal runaway of the battery cell 10.

Therefore, 1≤A/S₁≤100, on the one hand, enables the weak region 52 to have a large number of grain layers in the thickness direction, improves the fatigue resistance of the weak region 52, and reduces the risk of damage to the weak region 52 under normal usage conditions of the battery cell 10; and on the other hand, enables the weak region 52 to be more promptly damaged during thermal runaway of the battery cell 10, to achieve the purpose of timely pressure relief.

In some embodiments, 5≤A/S₁≤20.

A/S₁ may be any one point value among 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20, or a range value between any two thereof.

In the present embodiment, 5≤A/S₁≤20 makes the overall performance of the shell component 5 better, ensures that the weak region 52 has sufficient fatigue resistance under normal usage conditions of the battery cell 10, while ensuring that the weak region 52 can be promptly damaged during thermal runaway of the battery cell 10, and improves the service life of the battery cell 10.

In some embodiments, the smallest thickness of the weak region 52 is A, and the hardness of the weak region 52 is H₁, satisfying: 5 HBW/mm≤H₁/A≤10000 HBW/mm.

H₁/A may be any one point value among 5 HBW/mm, 6 HBW/mm, 7 HBW/mm, 20 HBW/mm, 50 HBW/mm, 61 HBW/mm, 62 HBW/mm, 63 HBW/mm, 64 HBW/mm, 75 HBW/mm, 90 HBW/mm, 100 HBW/mm, 120 HBW/mm, 150 HBW/mm, 190 HBW/mm, 500 HBW/mm, 1000 HBW/mm, 1200 HBW/mm, 1750 HBW/mm, 1800 HBW/mm, 2100 HBW/mm, 4000 HBW/mm, 5000 HBW/mm, 8000 HBW/mm, 9000 HBW/mm, or 10000 HBW/mm, or a range value between any two thereof.

The hardness of the weak region 52 is Brinell hardness (unit: HBW). The measurement principle in GB/T 23.1-2018 may be referred to for implementation of the measurement method of Brinell hardness. In an actual measurement process, the hardness of the weak region 52 may be measured on an inner surface or an outer surface of the weak region 52 in the thickness direction. The shell component 5 is, for example, the end cover 11 of the battery cell 10. The hardness of the weak region 52 may be measured on the outer surface of the weak region 52 away from an inner side of the battery cell 10, or the hardness of the weak region 52 may be measured on the inner surface of the weak region 52 facing the inner side of the battery cell 10.

When H₁/A>10000 HBW/mm, the weak region 52 is thin with large hardness, so that the weak region 52 is very thin and brittle, the weak region 52 can be easily damaged under normal usage conditions of the battery cell 10, and the battery cell 10 has shorter service life. When H₁/A<5 HBW/mm, the weak region 52 is thick with small hardness. During thermal runaway of the battery cell 10, the weak region 52 will be stretched and extended, thereby resulting in poor timeliness of pressure relief.

In the present embodiment, not only is the impact of the thickness of the weak region 52 on the performance of the shell component 5 considered, but also the impact of the hardness of the weak region 52 on the performance of the shell component 5 is considered. 5 HBW/mm≤H₁/A≤10000 HBW/mm not only can enable the weak region 52 to have sufficient strength under normal usage conditions of the battery cell 10, so that the weak region 52 is not easily damaged due to fatigue, thus extending the service life of the battery cell 10; but also can enable the shell component 5 to promptly release pressure through the weak region 52 during thermal runaway of the battery cell 10, reduce the risks of explosion of the battery cell 10, and improve the safety of the battery cell 10.

In some embodiments, 190 HBW/mm≤H₁/A≤4000 HBW/mm.

H₁/A may be any one point value among 190 HBW/mm, 250 HBW/mm, 280 HBW/mm, 300 HBW/mm, 350 HBW/mm, 400 HBW/mm, 450 HBW/mm, 500 HBW/mm, 600 HBW/mm, 700 HBW/mm, 875 HBW/mm, 1000 HBW/mm, 1200 HBW/mm, 1500 HBW/mm, 1750 HBW/mm, 1800 HBW/mm, 2000 HBW/mm, 2100 HBW/mm, 2500 HBW/mm, 3000 HBW/mm, 3500 HBW/mm, or 4000 HBW/mm, or a range value between any two thereof.

In the present embodiment, 190 HBW/mm≤H₁/A≤4000 HBW/mm makes the overall performance of the shell component 5 better, and ensures that the weak region 52 has sufficient strength under normal usage conditions of the battery cell 10, while ensuring that the weak region 52 can be promptly damaged during thermal runaway of the battery cell 10, thereby improving the service life of the battery cell 10 on the premise of ensuring the safety of the battery cell 10.

In some embodiments, 0.02 mm≤A≤1.6 mm.

A may be any one point value among 0.02 mm, 0.04 mm, 0.05 mm, 0.06 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.42mm, 1.43mm, 1.45 mm, 1.47mm, 1.5 mm, 1.55 mm, or 1.6 mm, or a range value between any two thereof.

When A<0.02 mm, it is difficult to form the weak region 52, and the weak region 52 can be easily damaged in the forming process. When A>1.6 mm, it is more difficult for the weak region 52 to be damaged during thermal runaway of the battery cell 10, and it is easy to fail in timely pressure relief.

Therefore, 0.02 mm≤A≤1.6 mm improves the timeliness of pressure relief during thermal runaway of the battery cell 10, while reducing the difficulty in forming a pressure relief region 56.

In some embodiments, 0.06 mm≤A≤0.4 mm.

A may be any one point value among 0.06 mm, 0.07 mm, 0.08 mm, 0.1 mm, 0.15 mm, 0.18 mm, 0.2 mm, 0.25 mm, 0.3 mm, 0.35 mm, or 0.4 mm, or a range value between any two thereof.

In the present embodiment, 0.06 mm≤A≤0.4 mm further reduces the difficulty in forming the weak region 52, and improves the timeliness of pressure relief during thermal runaway of the battery cell 10.

In some embodiments, the hardness of the weak region 52 is H₁, and the hardness of the non-weak region 51 is H₂, satisfying: H₁>H₂.

The hardness of the non-weak region 51 is Brinell hardness (unit: HBW). In an actual measurement process, the hardness of the non-weak region 51 may be measured on an inner surface or an outer surface of the non-weak region 51 in the thickness direction. The shell component 5 is, for example, the end cover 11 of the battery cell 10. The hardness of the non-weak region 51 may be measured on the outer surface of the non-weak region 51 away from the inner side of the battery cell 10, or the hardness of the non-weak region 51 may be measured on the inner surface of the non-weak region 51 facing the inner side of the battery cell 10.

In the present embodiment, H₁>H₂ is equivalent to increasing the hardness of the weak region 52, thereby increasing the strength of the weak region 52, and reducing the risk of damage to the weak region 52 under normal usage conditions of the battery cell 10.

In some embodiments, H₁/H₂≤5.

H₁/H₂ may be any one point value among 1.1, 1.5, 2, 2.5, 3, 3.5, 3.6, 4, 4.5, or 5, or a range value between any two thereof.

When H₁/H₂>5, the hardness of the weak region 52 may be too large, and it may be difficult for the weak region 52 to be damaged during thermal runaway of the battery cell 10.

Therefore, H₁/H₂≤5 reduces the risks for failure to promptly damage the weak region 52 during thermal runaway of the battery cell 10, and improves the safety of the battery cell 10.

In some embodiments, H₁/H₂≤2.5.

H₁/H₂ may be any one point value among 1.1, 1.11, 1.12, 1.2, 1.25, 1.3, 1.4, 1.5, 1.6, 1.7, 1.71, 1.72, 1.8, 1.9, 2, 2.1, 2.2, 2.3, 2.4, or 2.5, or a range value between any two thereof.

In the present embodiment, H₁/H₂≤2.5 can further reduce the risks for failure to promptly damage the weak region 52 during thermal runaway of the battery cell 10.

In some embodiments, 5 HBW≤H₂≤150 HBW.

H₂ may be any one point value among 5 HBW, 8 HBW, 9 HBW, 9.5 HBW, 10 HBW, 15 HBW, 16 HBW, 19 HBW, 20 HBW, 30 HBW, 40 HBW, 50 HBW, 52 HBW, 52.5 HBW, 53 HBW, 60 HBW, 70 HBW, 80 HBW, 90 HBW, 100 HBW, 110 HBW, 120 HBW, 130 HBW, 140 HBW, or 150 HBW, or a range value between any two thereof.

In some embodiments, 5 HBW≤H₁≤200 HBW.

H₁ may be any one point value among 5 HBW, 6 HBW, 8 HBW, 10 HBW, 15 HBW, 19 HBW, 20 HBW, 30 HBW, 50 HBW, 60 HBW, 70 HBW, 80 HBW, 90 HBW, 100 HBW, 110 HBW, 120 HBW, 130 HBW, 140 HBW, 150 HBW, 160 HBW, 170 HBW, 180 HBW, 190 HBW, or 200 HBW, or a range value between any two thereof.

In some embodiments, referring to FIGS. 7 and 8, FIG. 8 is a partial enlarged view of a shell component 5 provided in some other embodiments of the present application. The smallest thickness of the weak region 52 is A, and the smallest thickness of the non-weak region 51 is B, satisfying: 0.05≤A/B≤0.95.

The smallest thickness of the weak region 52 is a thickness at a thinnest position of the weak region 52. The smallest thickness of the non-weak region 51 is a thickness at a thinnest position of the non-weak region 51.

As shown in FIGS. 7 and 8, the shell component 5 comprises a first surface 54 and a second surface 55 that are oppositely arranged. The groove portion 53 is recessed from the first surface 54 toward a direction close to the second surface 55. A part of the shell component 5 located between a groove bottom surface 531 of the groove portion and the second surface 55 is the weak region 52.

The first surface 54 and the second surface 55 may be arranged in parallel, or may be arranged at a small angle. If the first surface 54 and the second surface 55 are arranged at a small angle, for example, the angle between them is within 10 degrees, a smallest distance between the first surface 54 and the second surface 55 is the smallest thickness of the non-weak region 51. As shown in FIGS. 7 and 8, if the first surface 54 is parallel to the second surface 55, the distance between the first surface 54 and the second surface 55 is the smallest thickness of the non-weak region 51.

The groove bottom surface 531 of the groove portion may be a flat surface, or may be a curved surface. If the groove bottom surface 531 of the groove portion is a flat surface, the groove bottom surface 531 of the groove portion and the second surface 55 may be arranged in parallel, or may be arranged at a small angle. If the groove bottom surface 531 of the groove portion and the second surface 55 are arranged at a small angle, for example, the angle between them is within 10 degrees, a smallest distance between the groove bottom surface 531 of the groove portion and the second surface 55 is the smallest thickness of the weak region 52. As shown in FIG. 7, if the groove bottom surface 531 of the groove portion is parallel to the second surface 55, a distance between the groove bottom surface 531 of the groove portion and the second surface 55 is the smallest thickness of the weak region 52. As shown in FIG. 8, if the groove bottom surface 531 of the groove portion is a curved surface, for example, the groove bottom surface 531 of the groove portion is an arc surface, a smallest distance between the groove bottom surface 531 of the groove portion and the second surface 55 is the smallest thickness of the weak region 52.

A/B may be any one point value among 0.05, 0.06, 0.07, 0.08, 0.1, 0.15, 0.2, 0.25, 0.3, 0.35, 0.4, 0.45, 0.5, 0.55, 0.6, 0.65, 0.7, 0.8, 0.85, 0.9, or 0.95, or a range value between any two thereof.

When A/B<0.05, the weak region 52 may have insufficient strength, and the probability of rupture of the weak region 52 under normal usage conditions of the battery cell 10 is increased. When A/B>0.95, the weak region 52 may not be easily damaged during thermal runaway of the battery cell 10, thereby failing in timely pressure relief, and increasing the probability of explosion of the battery cell 10. Therefore, 0.05≤A/B≤0.95 not only can reduce the probability of rupture of the weak region 52 under normal usage conditions of the battery cell 10, but also can reduce the probability of explosion during thermal runaway of the battery cell 10.

In some embodiments, 0.12≤A/B≤0.8.

A/B may be any one point value among 0.12, 0.13, 0.14, 0.15, 0.17, 0.2, 0.22, 0.25, 0.27, 0.3, 0.32, 0.35, 0.37, 0.4, 0.42, 0.45, 0.47, 0.5, 0.52, 0.55, 0.57, 0.6, 0.62, 0.65, 0.66, 0.67, 0.7, 0.72, 0.75, 0.77, or 0.8, or a range value between any two thereof.

In the present embodiment, 0.12≤A/B≤0.8 makes the overall performance of an external component better, and ensures that the weak region 52 has sufficient strength under normal usage conditions of the battery cell 10, while ensuring that the weak region 52 can be promptly damaged during thermal runaway of the battery cell 10. When the groove portion 53 is formed by stamping, controlling A/B to 0.12-0.8 can more easily achieve S₁/S₂≤0.5, to achieve the purpose of fining grains in the weak region 52.

In some embodiments, 0.2≤A/B≤0.5.

A/B may be any one point value among 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, or 0.5, or a range value between any two thereof.

In the present embodiment, A/B is controlled to 0.2-0.5, to further reduce the risk of damage to the weak region 52 under normal usage conditions of the battery cell 10, ensure that the weak region 52 can be promptly damaged during thermal runaway of the battery cell 10, and improve the timeliness of pressure relief.

In some embodiments, 0.02 mm≤A≤1.6 mm.

Further, 0.06 mm≤A≤0.4 mm.

In some embodiments, 1 mm≤B≤5 mm.

B may be any one point value among 1 mm, 2 mm, 3 mm, 4 mm, or 5 mm, or a range value between any two thereof.

When B>5 mm, the non-weak region 51 has a large thickness, and more materials are used for the shell component 5, so that the shell component 5 has a large weight and is less inexpensive. When B<1 mm, the non-weak region 51 has a small thickness, and the shell component 5 has poor deformation resistance.

Therefore, 1 mm≤B≤5 mm makes the shell component 5 inexpensive and have good deformation resistance.

Further, 1.2 mm≤B≤3.5 mm.

B may be any one point value among 1.2 mm, 1.25 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9mm, 3mm, 3.1 mm, 3.2mm, 3.3 mm, 3.4 mm, or 3.5 mm, or a range value between any two thereof.

In the present embodiment, 1.2 mm≤B≤3.5 mm makes the shell component 5 more inexpensive and have better deformation resistance.

Further, 2 mm≤B≤3 mm.

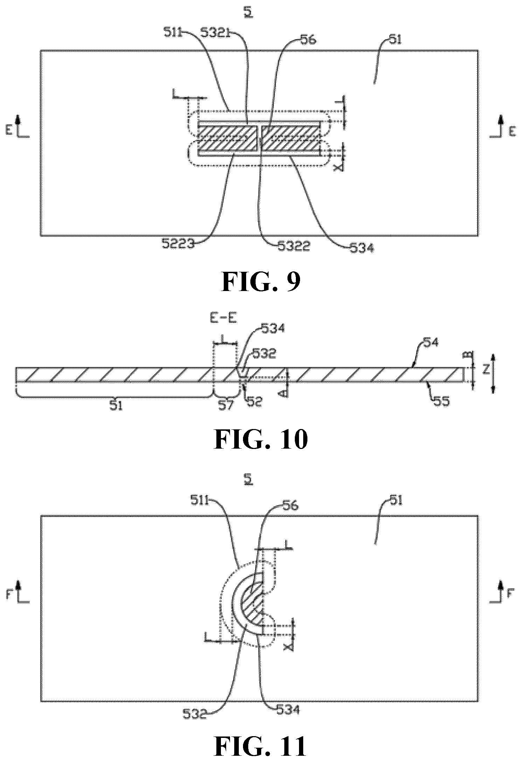

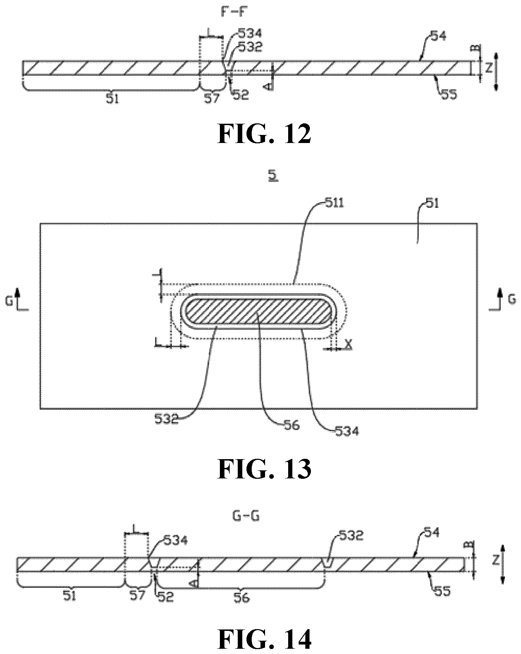

In some embodiments, referring to FIGS. 9-14, FIG. 9 is a schematic structural diagram of a shell component 5 provided in some other embodiments of the present application (showing a score groove 532); FIG. 10 is a section view E-E of the shell component 5 shown in FIG. 9; FIG. 11 is a schematic structural diagram of a shell component 5 provided in some other embodiments of the present application (showing a score groove 532); FIG. 12 is a section view F-F of the shell component 5 shown in FIG. 11; FIG. 13 is a schematic structural diagram of a shell component 5 provided in some other embodiments of the present application (showing a score groove 532); and FIG. 14 is a section view G-G of the shell component 5 shown in FIG. 13. The shell component 5 comprises a pressure relief region 56, the groove portion 53 comprises a score groove 532, the score groove 532 is arranged along an edge of the pressure relief region 56, the pressure relief region 56 is configured to be openable with the score groove 532 as a boundary, and the weak region 52 forms the bottom of the score groove 532.

The pressure relief region 56 is a region of the shell component 5 that can be opened after the weak region 52 is damaged. For example, when the internal pressure of the battery cell 10 reaches a threshold, the weak region 52 ruptures, and the pressure relief region 56 is opened outward under the action of emissions inside the battery cell 10. In this process, the weak region 52 ruptures along the score groove 532, and the pressure relief region 56 is opened, so that the pressure relief region 56 is opened with the score groove 532 as the boundary. After the pressure relief region 56 is opened, the shell component 5 can form a discharge outlet at a position corresponding to the pressure relief region 56, and the emissions inside the battery cell 10 can be discharged through the discharge outlet to release the pressure inside the battery cell 10.

The score groove 532 may be formed on the shell component 5 by a variety of approaches, such as by stamping, by milling, or by laser etching. The score groove 532 in the groove portion 53 is only one score groove, and the score groove 532 can be formed by stamping once. The score groove 532 may be a groove of various shapes, such as an annular groove, an arc groove, a U-shaped groove, or an H-shaped groove. The weak region 52 is formed at the bottom of the score groove 532, and the shape of the weak region 52 is the same as the shape of the score groove 532. For example, the weak region 52 is a U-shaped groove, and the weak region 52 extends along a U-shaped trajectory.

As an example, a largest width of the score groove 532 is X, and X≤10 mm. A width at a widest position of the score groove 532 is the largest width of the score groove 532.

In the present embodiment, the weak region 52 forms the bottom of the score groove 532. When the weak region 52 is damaged, the pressure relief region 56 can be opened with the weak region 52 as the boundary, to achieve pressure relief, thereby increasing the pressure relief area of the shell component 5.

In some embodiments, further referring to FIGS. 10, 12, and 14, the shell component 5 comprises a first surface 54 and a second surface 55 that are oppositely arranged, and the score groove 532 is recessed from the first surface 54 toward a direction close to the second surface 55.

The first surface 54 may be an inner surface of the shell component 5 facing an inner side of the battery cell 10, and the second surface 55 may be an outer surface of the shell component 5 away from the inner side of the battery cell 10; or the first surface 54 may be the outer surface of the shell component 5 away from the inner side of the battery cell 10, and the second surface 55 may be the inner surface of the shell component 5 facing the inner side of the battery cell 10. As an example, the first surface 54 is parallel to the second surface 55, and the smallest thickness of the non-weak region 51 is the distance between the first surface 54 and the second surface 55.

The groove bottom surface of the score groove 532 is the groove bottom surface 531 of the groove portion. A part of the shell component 5 between the groove bottom surface of the score groove 532 and the second surface 55 is a groove bottom wall of the score groove 532, and the groove bottom wall of the score groove 532 is the weak region 52.

In the present embodiment, the groove portion 53 only comprises one score groove 532, the score groove 532 is the groove portion 53, and the groove portion 53 is one groove with a simple structure. During forming, the score groove 532 can be formed on the first surface 54, which is simple forming, improves the production efficiency, and reduces the production costs.

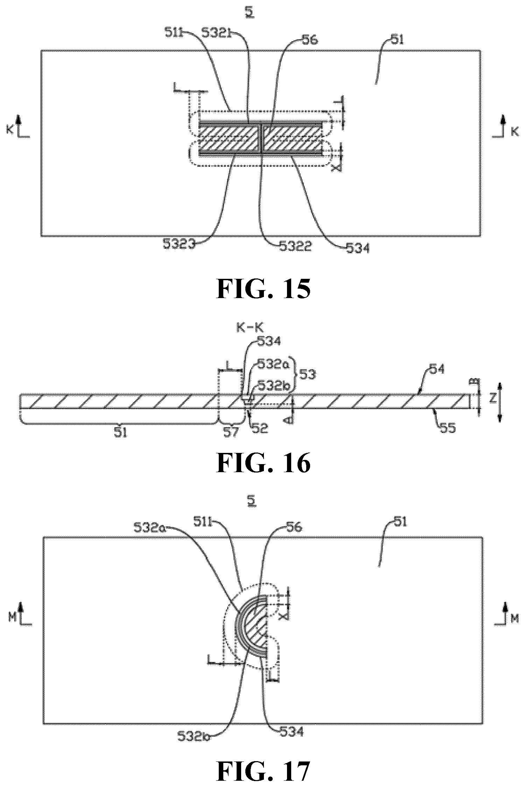

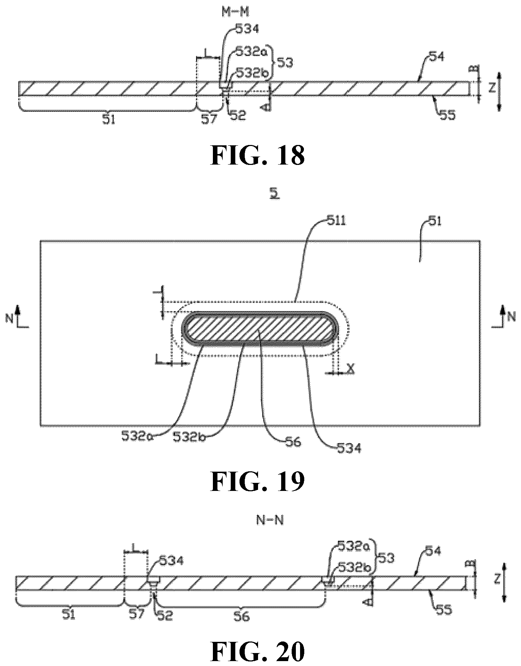

In some embodiments, referring to FIGS. 15-20, FIG. 15 is a schematic structural diagram of a shell component 5 provided in some other embodiments of the present application (showing two score grooves 532); FIG. 16 is a section view K-K of the shell component 5 shown in FIG. 15; FIG. 17 is a schematic structural diagram of a shell component 5 provided in some other embodiments of the present application (showing two score grooves 532); FIG. 18 is a section view M-M of the shell component 5 shown in FIG. 17; FIG. 19 is a schematic structural diagram of a shell component 5 provided in some other embodiments of the present application (showing two score grooves 532); and FIG. 20 is a section view N-N of the shell component 5 shown in FIG. 19. The shell component 5 comprises a first surface 54 and a second surface 55 that are oppositely arranged, the groove portion 53 comprises multiple score grooves 532, the multiple score grooves 532 are sequentially arranged on the shell component 5 along a direction from the first surface 54 to the second surface 55, and the weak region 52 is formed at the bottom of one of the score grooves 532 farthest from the first surface 54. The shell component 5 comprises a pressure relief region 56, each of the score grooves 532 is arranged along an edge of the pressure relief region 56, and the pressure relief region 56 is configured to be openable with the score groove 532 farthest from the first surface 54 as a boundary.

The groove portion 53 comprises multiple score grooves 532. It can be understood that the groove portion 53 is multiple grooves. Each of the score grooves 532 is arranged along the edge of the pressure relief region 56. It can be understood that the multiple score grooves 532 are all arranged around the pressure relief region 56, so that the multiple score grooves 532 extend in substantially the same direction, and the multiple score grooves 532 have substantially the same shape. The number of score grooves 532 in the groove portion 53 may be two, three, four, or more. The score grooves 532 may be formed by stamping on the shell component 5. During forming, the score grooves 532 may be formed by stamping along a direction from the first surface 54 to the second surface 55. When the multiple score grooves 532 are formed by stamping, the multiple score grooves 532 may be formed correspondingly by repeated stamping, and one score groove 532 is formed by stamping each time. The score groove 532 may be a groove of various shapes, such as an annular groove, an arc groove, a U-shaped groove, or an H-shaped groove.

The pressure relief region 56 is a region of the shell component 5 that can be opened after the weak region 52 is damaged. The score groove 532 farthest from the first surface 54 is located at an edge position of the pressure relief region 56. In a process of opening the pressure relief region 56, the weak region 52 cracks along the score groove 532 farthest from the first surface 54, thereby opening the pressure relief region 56 with the score groove 532 farthest from the first surface 54 as the boundary.

The weak region 52 is formed at the bottom of the score groove 532 farthest from the first surface 54. The score groove 532 farthest from the first surface 54 is a score groove 532 at a deepest (innermost) position. Among two adjacent score grooves 532, a score groove 532 away from the first surface 54 is arranged on the bottom surface of the score groove 532 close to the first surface 54. A part of the shell component 5 between the groove bottom surface of the score groove 532 farthest from the first surface 54 and the second surface 55 is the groove bottom wall of the score groove 532 farthest from the first surface 54. This groove bottom wall is the weak region 52. The groove bottom surface of the score groove 532 farthest from the first surface 54 is the groove bottom surface 531 of the groove portion. The score groove 532 farthest from the first surface 54 is an innermost score groove 532b, and a score groove 532 closest to the first surface 54 is an outermost score groove 532a.

As an example, a largest width of the outermost score groove 532a is X, and X≤10 mm. A width at a widest position of the outermost score groove 532a is the largest width of the outermost score groove 532a.

During forming, multiple score grooves 532 may be formed stagewise on the shell component 5, which can reduce a forming depth of each score groove 532, thereby reducing a forming force experienced by the shell component 5 when each score groove 532 is formed, and reducing the risks of cracking of the shell component 5, so that the shell component 5 is less likely to fail due to cracking at a position where the score groove 532 is arranged, thus extending the service life of the shell component 5.

In some embodiments, referring to FIGS. 16, 18, and 20, one of the score grooves 532 farthest from the second surface 55 is recessed from the first surface 54 toward a direction close to the second surface 55.

There are, for example, two score grooves 532 in the groove portion 53. The two score grooves 532 are a primary score groove and a secondary score groove respectively. The primary score groove is arranged on the first surface 54, that is, the primary score groove is recessed from the first surface 54 toward a direction close to the second surface 55, and the secondary score groove is arranged on a groove bottom surface of the primary score groove; that is, the secondary score groove is recessed from the groove bottom surface of the primary score groove in a direction close to the second surface 55. The primary score groove is the outermost score groove 532a, and the secondary score groove is the innermost score groove 532b.

The groove portion 53 is composed of multiple score grooves 532, and during forming, the multiple score grooves 532 can be gradually processed in a direction from the first surface 54 to the second surface 55, thereby achieving a high forming efficiency.

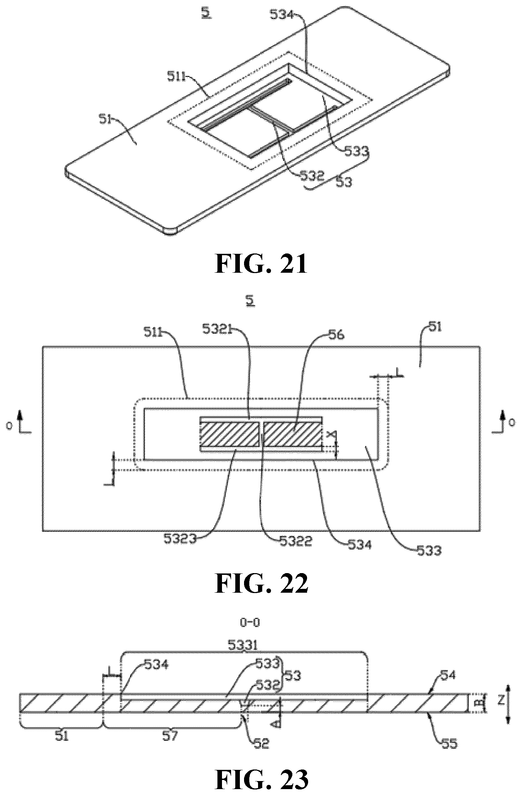

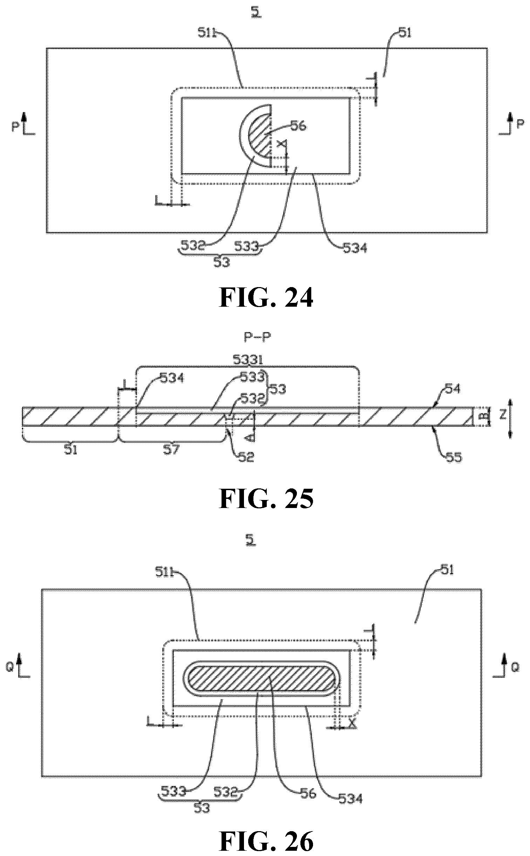

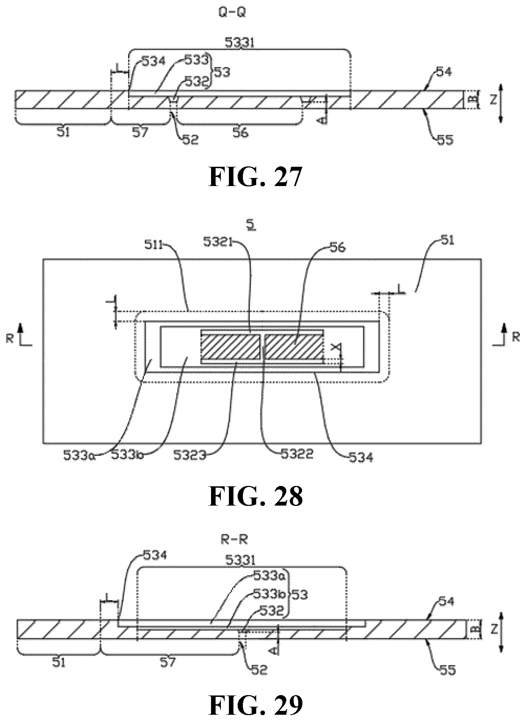

In some embodiments, referring to FIGS. 21-27, FIG. 21 is an axonometric view of a shell component 5 provided in some embodiments of the present application; FIG. 22 is a schematic structural diagram of the shell component 5 shown in FIG. 21 (showing a score groove 532 and a sunk groove 533); FIG. 23 is a section view O-O of the shell component 5 shown in FIG. 22; FIG. 24 is a schematic structural diagram of a shell component 5 provided in some other embodiments of the present application (showing a score groove 532 and a sunk groove 533); FIG. 25 is a section view P-P of the shell component 5 shown in FIG. 24; FIG. 26 is a schematic structural diagram of a shell component 5 provided in some other embodiments of the present application (showing a score groove 532 and a sunk groove 533); and FIG. 27 is a section view Q-Q of the shell component 5 shown in FIG. 26. The shell component 5 comprises a first surface 54 and a second surface 55 that are oppositely arranged, the groove portion 53 further comprises a sunk groove 533, the sunk groove 533 is recessed from the first surface 54 toward a direction close to the second surface 55, and the pressure relief region 56 is formed on a groove bottom wall 5331 of the sunk groove.

It should be noted that, no matter whether there is one or more score grooves 532 in the groove portion 53, the groove portion 53 may comprise one sunk groove 533. It can be understood that the groove portion 53 comprises both the score groove 532 and the sunk groove 533, and the groove portion 53 is multiple grooves. The sunk groove 533 and the score groove 532 are arranged along a direction from the first surface 54 to the second surface 55. During forming, first, the sunk groove 533 may be formed on the shell component 5, and then the score groove 532 may be formed on the groove bottom wall 5331 of the sunk groove. The sunk groove 533 may be formed on the shell component 5 by a variety of approaches, such as by stamping, by milling, or by laser etching.

The groove bottom wall 5331 of the sunk groove is a part of the shell component 5 located below a groove bottom surface of the sunk groove 533. After the sunk groove 533 is formed on the first surface 54, a remaining part of a region of the shell component 5 where the sunk groove 533 is arranged is the groove bottom wall 5331 of the sunk groove. As shown in FIGS. 23, 25, and 27, a part of the shell component 5 located between the groove bottom surface of the sunk groove 533 and the second surface 55 is the groove bottom wall 5331 of the sunk groove. The pressure relief region 56 may be a part of the groove bottom wall 5331 of the sunk groove.

The arrangement of the sunk groove 533 can reduce the depth of the score groove 532 while ensuring a constant thickness of the final weak region 52, thereby reducing a forming force experienced by the shell component 5 when the score groove 532 is formed, and reducing the risks of cracking of the shell component 5. In addition, the sunk groove 533 can provide an avoidance space for the pressure relief region 56 in an opening process. Even if the first surface 54 is shielded by an obstacle, the pressure relief region 56 can still be opened for pressure relief.

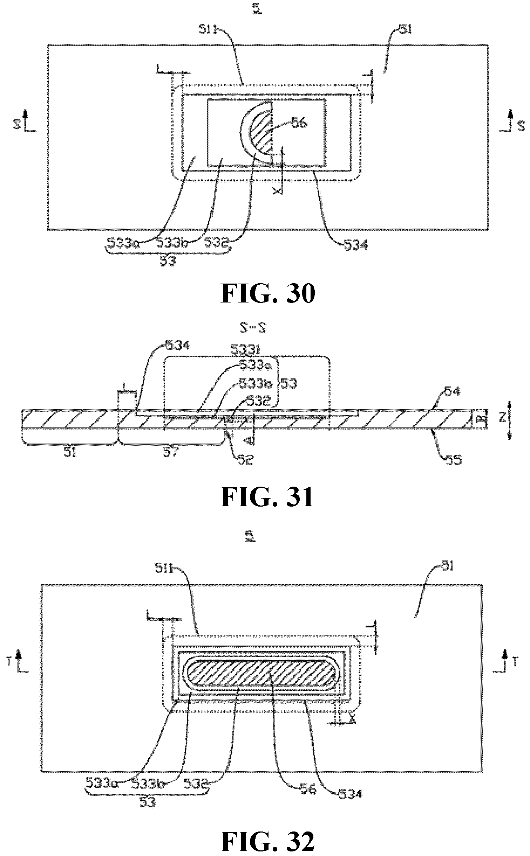

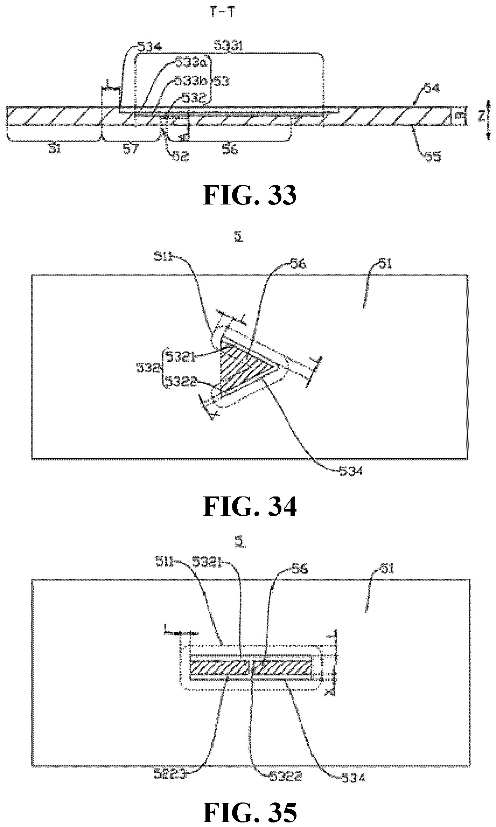

In some embodiments, referring to FIGS. 28-33, FIG. 28 is a schematic structural diagram of a shell component 5 provided in some embodiments of the present application (showing a score groove 532 and two sunk grooves 533); FIG. 29 is a section view R-R of the shell component 5 shown in FIG. 28; FIG. 30 is a schematic structural diagram of a shell component 5 provided in some other embodiments of the present application (showing a score groove 532 and two sunk grooves 533); FIG. 31 is a section view S-S of the shell component 5 shown in FIG. 30; FIG. 32 is a schematic structural diagram of a shell component 5 provided in some other embodiments of the present application (showing a score groove 532 and two sunk grooves 533); and FIG. 33 is a section view T-T of the shell component 5 shown in FIG. 32. The shell component 5 comprises a first surface 54 and a second surface 55 that are oppositely arranged, the groove portion 53 further comprises multiple sunk grooves 533, the multiple sunk grooves 533 are sequentially arranged on the shell component 5 along a direction from the first surface 54 to the second surface 55, one of the sunk grooves 533 farthest from the second surface 55 is recessed from the first surface 54 toward a direction close to the second surface 55, and the pressure relief region 56 is formed on a groove bottom wall 5331 of the sunk groove farthest from the first surface 54.

It should be noted that, no matter whether there is one or more score grooves 532 in the groove portion 53, the groove portion 53 may comprise multiple sunk grooves 533. It can be understood that the groove portion 53 comprises both the score groove 532 and the sunk groove 533, and the groove portion 53 is multiple grooves. The sunk groove 533 and the score groove 532 are arranged along a direction from the first surface 54 to the second surface 55. During forming, first, the multiple sunk grooves 533 may be formed on the shell component 5, and then the score groove 532 may be formed on the groove bottom wall 5331 of the sunk groove farthest from the first surface 54.

The sunk groove 533 farthest from the second surface 55 (closest to the first surface 54) is an outermost sunk groove 533a, and the sunk groove 533 farthest from the first surface 54 is an innermost sunk groove 533b. The outermost sunk groove 533a is arranged on the first surface 54, and the outermost sunk groove 533a is recessed from the first surface 54 toward a direction close to the second surface 55.

The groove bottom wall 5331 of the sunk groove farthest from the first surface 54 is a part of the shell component 5 located below a groove bottom surface of the sunk groove 533 farthest from the first surface 54. After the multiple sunk grooves 533 are formed on the shell component 5, a remaining part of a region of the shell component 5 where the sunk groove 533 farthest from the first surface 54 is arranged is the groove bottom wall 5331 of the sunk groove. As shown in FIGS. 29, 31, and 33, a part of the shell component 5 located between the groove bottom surface of the sunk groove 533 farthest from the first surface 54 and the second surface 55 is the groove bottom wall 5331 of the sunk groove farthest from the first surface 54. The pressure relief region 56 may be a part of the groove bottom wall 5331 of the sunk groove farthest from the first surface 54.

The number of sunk grooves 533 in the groove portion 53 may be two, three, four, or more. Among two adjacent sunk grooves 533, a sunk groove 533 away from the first surface 54 is arranged on a bottom surface of the sunk groove 533 close to the first surface 54. Along the direction from the first surface 54 to the second surface 55, outlines of groove bottom surfaces of the multiple sunk grooves 533 decrease stagewise. The sunk grooves 533 may be formed on the shell component 5 by a variety of approaches, such as by stamping, by milling, or by laser etching. For example, the sunk grooves 533 are formed on the shell component 5 by stamping. During forming, the sunk grooves 533 may be sequentially formed by stamping along the direction from the first surface 54 to the second surface 55, and then the score grooves 532 may be formed by stamping. For example, there are two sunk grooves 533 and one score groove 532 in the groove portion 53. During forming by stamping, stamping may be first performed twice to correspondingly form the two sunk grooves 533, and then stamping may be performed once to correspondingly form the score groove 532. As an example, in FIGS. 28-33, there are two sunk groove 533 in the groove portion 53.

During forming of the multiple sunk grooves 533, a forming depth of each sunk groove 533 can be reduced, a forming force experienced by the shell component 5 when each sunk groove 533 is formed can be reduced, and the risks of cracking of the shell component 5 can be reduced. In addition, the multiple sunk grooves 533 can provide an avoidance space for the pressure relief region 56 in an opening process. Even if the first surface 54 is shielded by an obstacle, the pressure relief region 56 can still be opened for pressure relief.

In some embodiments, an internal space of the sunk groove 533 is a cylinder, a prismoid, a frustum of a cone, or a frustum of a prism.

The internal space of the sunk groove 533 is a space jointly defined by a groove side surface and the groove bottom surface of the sunk groove 533. The prismoid may be a triangular prism, a quadrangular prism, a pentagonal prism, or a hexagonal prism, etc.; and the frustum of a prism may be a frustum of a triangular pyramid, a frustum of a quadrangular pyramid, a frustum of pentagonal pyramid, or a frustum of hexagonal pyramid, etc. As an example, in FIGS. 21-33, the internal space of the groove portion 53 is a quadrangular prism. Specifically, the internal space of the groove portion 53 is a cuboid.

In the present embodiment, the sunk groove 533 has a simple structure, can be easily formed, and can provide more avoidance space for the pressure relief region 56 in the opening process.

In some embodiments, referring to FIG. 34, FIG. 34 is a schematic structural diagram of a shell component 5 provided in some embodiments of the present application (showing a score groove 532, the score groove 532 being V-shaped). The score groove 532 comprises a first groove segment 5321 and a second groove segment 5322, and the first groove segment 5321 intersects with the second groove segment 5322. The first groove segment 5321 and the second groove segment 5322 are arranged along an edge of the pressure relief region 56.

The first groove segment 5321 and the second groove segment 5322 may be linear grooves, or may be non-linear grooves, such as circular arc grooves. In an embodiment where both the first groove segment 5321 and the second groove segment 5322 are linear grooves, it can be understood that both the first groove segment 5321 and the second groove segment 5322 extend along a straight line, and the first groove segment 5321 and the second groove segment 5322 may be arranged at an acute angle, a right angle, or an obtuse angle. The first groove segment 5321 and the second groove segment 5322 may be arranged crosswise. For example, an intersection position of the first groove segment 5321 and the second groove segment 5322 is located at a midpoint position of the first groove segment 5321 and a midpoint position of the second groove segment 5322. As shown in FIG. 34, the intersection position of the first groove segment 5321 and the second groove segment 5322 may also be located at one end of the first groove segment 5321 and at one end of the second groove segment 5322, the first groove segment 5321 and the second groove segment 5322 form a V-shaped structure, and the score groove 532 is V-shaped.

In the present embodiment, the stress is more concentrated at the intersection position of the first groove segment 5321 and the second groove segment 5322, so that the weak region 52 can be first damaged at the intersection position of the first groove segment 5321 and the second groove segment 5322. At a constant detonation pressure of the battery cell 10, the weak region 52 can be made thicker to reduce the forming depth of the score groove 532.

In some embodiments, referring to FIGS. 9, 15, 22, and 28, the score groove 532 may further comprise a third groove segment 5323, the first groove segment 5321 and the third groove segment 5323 are oppositely arranged, the second groove segment 5322 intersects with the third groove segment 5323, and the first groove segment 5321, the second groove segment 5322, and the third groove segment 5323 are arranged along the edge of the pressure relief region 56.

The first groove segment 5321, the second groove segment 5322, and the third groove segment 5323 may all be linear grooves, or may all be non-linear grooves, such as circular arc grooves. In an embodiment where the first groove segment 5321, the second groove segment 5322, and the third groove segment 5323 are all linear grooves, it can be understood that the first groove segment 5321, the second groove segment 5322, and the third groove segment 5323 all extend along a straight line, and the first groove segment 5321 and the third groove segment 5323 may be arranged in parallel, or may be arranged at an angle. The first groove segment 5321 and the third groove segment 5323 may both be perpendicular to the second groove segment 5322, or may both be non-perpendicular to the second groove segment 5322.

A connection position of the second groove segment 5322 and the first groove segment 5321 may be located at one end of the first groove segment 5321, or may be located at a position deviating from one end of the first groove segment 5321, for example, the connection position of the second groove segment 5322 and the first groove segment of 5321 is located at a midpoint position in an extension direction of the first groove segment 5321. A connection position of the second groove segment 5322 and the third groove segment 5323 may be located at one end of the third groove segment 5323, or may deviate from one end of the third groove segment 5323, for example, the connection position of the second groove segment 5322 and the third groove segment 5323 is located at a midpoint position in an extension direction of the third groove segment 5323.

It should be noted that, in an embodiment where the groove portion 53 comprises multiple score grooves 532, it can be understood that among two adjacent score grooves 532, a first groove segment 5321 of a score groove 532 away from the first surface 54 is arranged on a groove bottom surface of a first groove segment 5321 of a score groove 532 close to the first surface 54; a second groove segment 5322 of the score groove 532 away from the first surface 54 is arranged on a groove bottom surface of a second groove segment 5322 of the score groove 532 close to the first surface 54; and a third groove segment 5323 of the score groove 532 away from the first surface 54 is arranged on a groove bottom surface of a third groove segment 5323 of the score groove 532 close to the first surface 54.

In the present embodiment, the pressure relief region 56 can be opened with the first groove segment 5321, the second groove segment 5322, and the third groove segment 5323 as boundaries. During pressure relief of the battery cell 10, the pressure relief region 56 can be opened more easily, thereby realizing large-area pressure relief of the shell component 5.

In some embodiments, further referring to FIGS. 9, 15, 22, and 28, the first groove segment 5321, the second groove segment 5322, and the third groove segment 5323 define two pressure relief regions 56. The two pressure relief regions 56 are located on both sides of the second groove segment 5322 respectively.

As an example, the first groove segment 5321, the second groove segment 5322, and the third groove segment 5323 form an H-shaped score groove 532, the connection position of the second groove segment 5322 and the first groove segment 5321 is located at a midpoint position of the first groove segment 5321, and the connection position of the third groove segment 5323 and the second groove segment 5322 is located at a midpoint position of the third groove segment 5323. The two pressure relief regions 56 are symmetrically arranged on both sides of the second groove segment 5322. It can be understood that the two pressure relief regions 56 have an equal area. In other embodiments, the two pressure relief regions 56 may also be arranged asymmetrically on both sides of the second groove segment 5322, so that the two pressure relief regions 56 have unequal areas. For example, the first groove segment 5321 and the third groove segment 5322 are both perpendicular to the second groove segment 5322, the connection position of the second groove segment 5322 and the first groove segment 5321 deviates from the midpoint position of the first groove segment 5321, and/or the connection position of the third groove segment 5323 and the second groove segment 5323 is located at the midpoint position of the third groove segment 5323.

The two pressure relief regions 56 are located on both sides of the second groove segment 5322 respectively, so that the two pressure relief regions 56 are bounded by the second groove segment 5322. After the shell component 5 ruptures at a position of the second groove segment 5322, the two pressure relief regions 56 can be opened in folio along the first groove segment 5321 and the third groove segment 5323, to achieve pressure relief, which can effectively improve the pressure relief efficiency of the shell component 5.

In some other embodiments, the first groove segment 5321, the second groove segment 5322, and the third groove segment 5323 are sequentially connected, and the first groove segment 5321, the second groove segment 5322, and the third groove segment 5323 define one pressure relief region 56.

The first groove segment 5321, the second groove segment 5322, and the third groove segment 5323 are sequentially connected to form a U-shaped score groove 532.

In some embodiments, the score groove 532 is a groove extending along a non-closed trajectory.

The non-closed trajectory refers to a trajectory of which two ends in the extension direction are not connected. The non-closed trajectory may be an arc trajectory, or a U-shaped trajectory, etc.

In the present embodiment, the score groove 532 is a groove along a non-closed trajectory, and the pressure relief region 56 can be opened by flipping. After being opened, the pressure relief region 56 is finally connected to other regions of the shell component 5, thus reducing the risks of splashing after the pressure relief region 56 is opened.

In some embodiments, referring to FIGS. 11, 17, 24, and 30, the score groove 532 is a circular arc groove.

The circular arc groove is a groove extending along a circular arc trajectory, and the arc-shaped trajectory is a non-closed trajectory. A radius angle of the circular arc groove may be less than, equal to, or greater than 180°.

The circular arc groove has a simple structure and can be easily formed. In the pressure relief process, the pressure relief region 56 can quickly rupture along the circular arc groove, to quickly open the pressure relief region 56.

In some embodiments, referring to FIGS. 13, 19, 26 and 32, the score groove 532 is a groove extending along a closed trajectory.

The closed trajectory refers to a trajectory of which a head end and a rear end are connected. The closed trajectory may be a circular trajectory, or a rectangular trajectory, etc.

In the pressure relief process, the shell component 5 can rupture along the score groove 532, so that the pressure relief region 56 can be opened in a detached manner, thereby increasing the pressure relief area of the shell component 5, and improving the pressure relief rate of the shell component 5.

In some embodiments, the score groove 532 is an annular groove.

The annular groove may be a rectangular annular groove or a circular annular groove.

The annular groove has a simple structure, and can be easily formed. In the pressure relief process, the shell component 5 can quickly rupture along the annular groove, to quickly open the pressure relief region 56.

In some embodiments, an area of the pressure relief region 56 is D, satisfying: 90 mm²≤D≤1500 mm².

In FIGS. 9, 11, 13, 15, 17, 19, 22, 24, 26, 28, 30, 32, and 34, the shaded area is the area of the pressure relief region 56.

It should be noted that in an embodiment where the groove portion 53 comprises multiple score grooves 532, the area of the pressure relief region 56 is an area defined by a score groove 532 at a deepest (innermost) position.

D may be any one point value among 90 mm², 95 mm², 100 mm², 150 mm², 200 mm², 250 mm², 300 mm², 350 mm², 400 mm², 450 mm², 500 mm², 550 mm², 600 mm², 650 mm², 700 mm², 750 mm², 800 mm², 900 mm², 950 mm², 1000 mm², 1050 mm², 1100 mm², 1150 mm², 1200 mm², 1250 mm², 1300 mm², 1350 mm², 1400 mm², 1450 mm², or 1500 mm², or a range value between any two thereof.

When D<90 mm², the shell component 5 has a small pressure relief area, and the pressure relief during thermal runaway of the battery cell 10 is less prompt. When D>1500 mm², the pressure relief region 56 has poor impact resistance, the deformation of the pressure relief region 56 subjected to a force is increased, and the weak region 52 can be easily damaged under normal usage conditions of the battery cell 10, thus affecting the service life of the battery cell 10. Therefore, 90 mm²≤D≤1500 mm² not only can extend the service life of the battery cell 10, but also can improve the safety of the battery cell 10.

Further, 150 mm²≤D≤1200 mm². This makes the overall performance of the shell component 5 better, and enables the shell component 5 to have a large pressure relief area and good impact resistance.

Further, 200 mm²≤D≤1000 mm².

Further, 250 mm²≤D≤800 mm².

In some embodiments, referring to FIGS. 4-34, the shell component 5 comprises the first surface 54 and the second surface 55 that are oppositely arranged, the groove portion 53 is recessed from the first surface 54 toward a direction close to the second surface 55, the groove portion 53 forms an outer edge 534 on the first surface 54, and a region of the shell component 5 beyond a preset distance from the outer edge 534 is the non-weak region 51. The preset distance is L.

L may be 1 mm, 2 mm, 3 mm, 4 mm, 5 mm, 6 mm, 7 mm, 8 mm, 9 mm, or 10 mm, etc.

In the embodiments shown in FIGS. 9-14, the groove portion 53 only comprises one score groove 532, the score groove 532 is arranged on the first surface 54, a groove side surface of the score groove 532 intersects with the first surface 54 to form the outer edge 534, and the groove side surface of the score groove 532 is arranged around the groove bottom surface of the score groove 532. It should be noted that, in the embodiment shown in FIG. 13, since the score groove 532 is a groove extending along a closed trajectory, the groove side surface of the score groove 532 intersects with the first surface 54 to form an inner ring line and an outer ring line located on an outer side of the inner ring line. The outer ring line is the outer edge 534.

In the embodiments shown in FIGS. 15-20, the groove portion 53 only comprises multiple score grooves 532, the outermost score groove 532a is arranged on the first surface 54, and a groove side surface of the outermost score groove 532a intersects with the first surface 54 to form the outer edge 534. It should be noted that, in the embodiment shown in FIG. 19, since the score groove 532 is a groove extending along a closed trajectory, the outermost score groove 532a intersects with the first surface 54 to form an inner ring line and an outer ring line located on an outer side of the inner ring line. The outer ring line is the outer edge 534.

In the embodiments shown in FIGS. 21-27, the groove portion 53 further comprises a sunk groove 533, the sunk groove 533 is arranged on the first surface 54, a groove side surface of the sunk groove 533 intersects with the first surface 54 to form the outer edge 534, and the groove side surface of the sunk groove 533 is arranged around by the groove bottom surface of the sunk groove 533. In the embodiments shown in FIGS. 28-33, the groove portion 53 further comprises multiple sunk grooves 533, the outermost sunk groove 533a is arranged on the first surface 54, and a groove side surface of the outermost sunk groove 533a intersects with the first surface 54 to form the outer edge 534.

It can be understood that a distance between the outer edge 534 and an inner edge 511 of the non-weak region 51 is the preset distance L, and the shape of the inner edge 511 of the non-weak region 51 may be substantially the same as the shape of the outer edge 534. The direction of the preset distance L may be perpendicular to the thickness direction of the non-weak region 51, that is to say, the preset distance L may be measured along a direction perpendicular to the thickness direction of the non-weak region 51. When an average grain size of the non-weak region 51 is measured, the measurement may be performed in a region beyond the outer edge 534.

In the present embodiment, the region of the shell component 5 beyond the preset distance from the outer edge 534 is the non-weak region 51. The non-weak region 51 is at a certain distance from the groove portion 53, and the non-weak region 51 is less susceptible to the influence of the process of forming the groove portion 53, so that grains in the non-weak region 51 are more uniform.

In some embodiments, L=5mm.

It should be noted that, as shown in FIGS. 9 and 15, in an embodiment where the first groove segment 5321 and the third groove segment 5323 of the score groove 532 are oppositely arranged, for example, the first groove segment 5321 is parallel to the third groove segment 5323, when a distance between the first groove segment 5321 and the third groove segment 5323 is greater than 2*L, the inner edge 511 of the non-weak region 51 is partially located in the pressure relief region 56, so that the pressure relief region 56 is partially located in the non-weak region 51. In other embodiments, referring to FIG. 35, FIG. 35 is a schematic structural diagram of a shell component 5 provided in other embodiments of the present application. When the distance between the first groove segment 5321 and the third groove segment 5323 is less than or equal to 2*L, the inner edge 511 of the non-weak region 51 is not located in the pressure relief region 56, and the inner edge 511 of the non-weak region 51 is roughly rectangular. Along a width direction of the first groove segment 5321, a distance between the first groove segment 5321 and an inner edge 511 of the non-weak region 51 is L; along a length direction of the first groove segment 5321, a distance between the first groove segment 5321 and an inner edges 511 of the non-weak region 51 is L; along a width direction of the third groove segment 5323, a distance between the third groove segment 5323 and an inner edge 511 of the non-weak region 51 is L; and along a length direction of the third groove segment 5323, a distance between the third groove segment 5323 and an inner edge 511 of the non-weak region 51 is L.

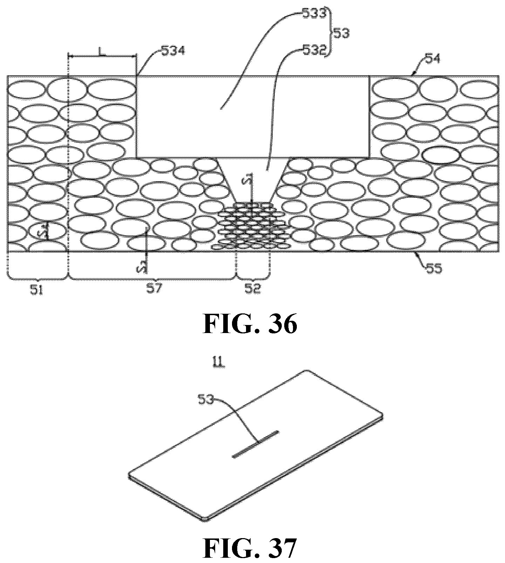

In some embodiments, referring to FIG. 36, FIG. 36 is a grain diagram (schematic diagram) of a shell component 5 provided in some other embodiments of the present application. The shell component 5 further comprises a transition region 57, the transition region 57 connects the weak region 52 to the non-weak region 51, and an average grain size of the transition region 57 is S₃, satisfying: S₃≤S₂.

As an example, S₃>S₁.

The transition region 57 is a part of the shell component 5 connecting the weak region 52 to the non-weak region 51. The transition region 57 is arranged around an outer side of the weak region 52, and the non-weak region 51 is arranged around an outer side of the transition region 57. The weak region 52, the transition region 57, and the non-weak region 51 are integrally formed.

The average grain size of the transition region 57 may gradually decrease from the non-weak region 51 to the weak region 52. As an example, as shown in FIG. 36, for example, the groove portion 53 comprises a sunk groove 533 and a score groove 532, an average grain size of a region of the transition region 57 located on an outer side the sunk groove 533 may be larger than an average grain size of a region of the transition region 57 located at the bottom of the sunk groove 533, the average grain size of the region of the transition region 57 located on the outer side the sunk groove 533 may be smaller than or equal to the average grain size S₂ of the non-weak region 51, and the average grain size of the region of the transition region 57 located at the bottom of the sunk groove 533 may be larger than the average grain size S₁ of the weak region 52.

In the present embodiment, the transition region 57 functions to connect the weak region 52 to the non-weak region 51, so that the weak region 52 and the non-weak region 51 are integrally formed.

In some embodiments, referring to FIG. 37, FIG. 37 is a schematic structural diagram of an end cover 11 provided in some embodiments of the present application. The shell component 5 is an end cover 11. The end cover 11 is configured to close an opening of a case 12, and the case 12 is configured to accommodate an electrode assembly 2.

It can be understood that the end cover 11 is provided with a groove portion 53 to correspondingly form a weak region 52 and a non-weak region 51. The first surface 54 and the second surface 55 of the shell component 5 are two opposite surfaces of the end cover 11 in its thickness direction respectively, that is, one of the first surface 54 and the second surface 55 is an inner surface of the end cover 11 in its thickness direction, and the other one is an outer surface of the end cover 11 in its thickness direction.

The end cover 11 may be a circular or rectangular platy structure.

As an example, in the embodiment shown in FIG. 37, the end cover 11 is a rectangular platy structure.

In the present embodiment, the end cover 11 has a pressure relief function, to ensure the safety of the battery cell 10.

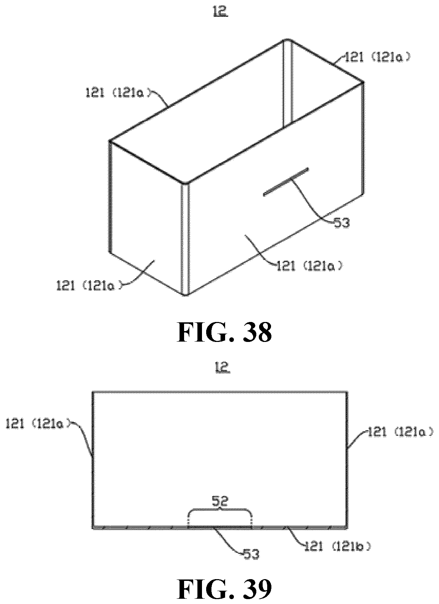

In some embodiments, referring to FIGS. 38 and 39, FIG. 38 is a schematic structural diagram of a case 12 provided in some embodiments of the present application; and FIG. 39 is a schematic structural diagram of a case 12 provided in some other embodiments of the present application. The shell component 5 is a case 12, the case 12 comprises an opening, and the case 12 is configured to accommodate an electrode assembly 2.

In the present embodiment, a case 12 of a shell 1 is the shell component 5, and an end cover 11 of the shell 1 is configured to close an opening of the case 12. The case 12 may be a hollow structure with an opening formed at one end, or may be a hollow structure with openings formed at two opposite ends. The case 12 may be a cuboid, or a cylinder, etc.

In the present embodiment, the shell component 5 is the case 12, so that the case 12 has a pressure relief function, to ensure the safety of the battery cell 10.

In some embodiments, the case 12 comprises a plurality of integrally formed wall portions 121, the plurality of wall portions 121 jointly define an internal space of the case 12, and at least one of the wall portions 121 is provided with a groove portion 53.

In the case 12, one of the wall portions 121 may be provided with the groove portion 53 to correspondingly form a weak region 52 and a non-weak region 51 that are integrally formed on the wall portion 121; or two or more wall portions 121 may each be provided with the groove portion 53 to form a weak region 52 and a non-weak region 51 that are integrally formed on each of the wall portions 121 provided with the groove portion 53. For each of the wall portions 121 provided with the groove portion 53, the first surface 54 and the second surface 55 of the shell component 5 are two opposite surfaces of the wall portion 121 in its thickness direction respectively, that is, one of the first surface 54 and the second surface 55 is an inner surface of the wall portion 121 in its thickness direction, and the other one is an outer surface of the wall portion 121 in its thickness direction.

In the present embodiment, the plurality of wall portions 121 are integrally formed, so that the wall portion 121 provided with the groove portion 53 has better reliability.

In some embodiments, further referring to FIGS. 38 and 39, the plurality of wall portions 121 comprise a bottom wall 121b and a plurality of side walls 121a arranged around the bottom wall 121b. The case 12 is formed with an opening at one end opposite to the bottom wall 121b. The bottom wall 121b is provided with the groove portion 53; and/or at least one of the side walls 121a is provided with the groove portion 53.

In the present embodiment, the case 12 is a hollow structure with an opening formed at one end. The number of side walls 121a in the case 12 may be three, four, five, six, or more. The number of side walls 121a provided with the groove portion 53 may be one, two, three, four, five, six, or more.

As an example, in FIG. 38, only one of the side walls 121a is provided with the groove portion 53, to correspondingly form a weak region 52 and a non-weak region 51 on the side wall 121a; and in FIG. 39, only the bottom wall 121b is provided with the groove portion 53 to correspondingly form a weak region 52 and a non-weak region 51 on the bottom wall 121b.

In some embodiments, further referring to FIGS. 38 and 39, the case 12 is a cuboid.

It can be understood that the number of side walls 121a in the case 12 is four.

The cuboid case is adapted to a square battery cell, and can satisfy the requirements of the battery cell 10 for large capacity.

In some embodiments, the material of the shell component 5 includes an aluminum alloy.

The aluminum alloy shell component 5 is light in weight, has good ductility, has good plastic deformation ability, and can be easily formed.

In an embodiment with 0.1≤S₁/S₂≤0.5, since the aluminum alloy has good ductility, it is easier to control S₁/S₂ to below 0.5 (including 0.5) with a higher excellence rate of formed groove portions when groove portions 53 are formed by stamping on the shell component 5.

In some embodiments, the aluminum alloy comprises components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%. This aluminum alloy has lower hardness and better forming ability, thereby reducing the difficulty in forming the groove portion 53, improving the forming accuracy of the groove portion 53, and improving the pressure relief consistency of the shell component 5.

In some embodiments, the aluminum alloy comprises components at percentage mass contents of: aluminum≥96.7%, 0.05%≤copper≤0.2%, iron≤0.7%, manganese≤1.5%, silicon≤0.6%, zinc≤0.1%, components of other individual elements≤0.05%, and total components of other elements≤0.15%. The shell component 5 made of this aluminum alloy has higher hardness, high strength, and good damage resistance.

An embodiment of the present application provides a battery cell 10, comprising the shell component 5 provided in any one of the above embodiments.

In some embodiments, the battery cell 10 further comprises a case 12, the case 12 has an opening, and the case 12 is configured to accommodate an electrode assembly 2. The shell component 5 is an end cover 11, and the end cover 11 closes the opening.

In some embodiments, the shell component 5 is a case 12, the case 12 comprises an opening, and the case 12 is configured to accommodate an electrode assembly 2, The battery cell 10 further comprises an end cover 11, and the end cover 11 closes the opening.

An embodiment of the present application provides a battery 100, comprising the battery cell 10 provided in any one of the above embodiments.

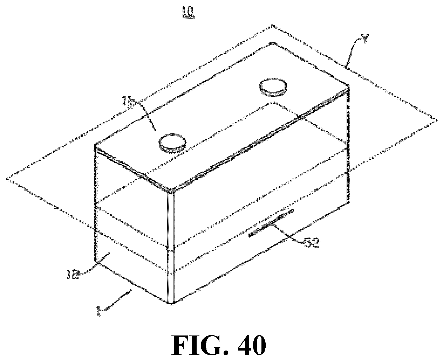

In some embodiments, referring to FIG. 40, FIG. 40 is a schematic structural diagram of a battery cell 10 provided in some embodiments of the present application. The weak region 52 is located in a lower part of the battery cell 10.

In the battery cell 10, along a height direction of the shell 1 of the battery cell 10, a part of the battery cell 10 located below a mid-plane Y of the shell 1 is the lower part of the battery cell 10. The mid-plane Y is perpendicular to the height direction of the shell 1, and a distance from the mid-plane Y to either end surface of the shell 1 in the height direction is equal. For example, the shell 1 comprises a case 12 and an end cover 11, and the end cover 11 closes an opening of the case 12. The case 12 and the end cover 11 are arranged along the height direction of the shell 1. Along the height direction of the shell 1, the mid-plane Y is located at a middle position between an outer surface of the end cover 11 away from the case 12 and an outer surface of the case 12 away from the end cover 11.

If the weak region 52 is located in the lower part of the battery cell 10, the groove portion 53 is located in the lower part of the battery cell 10, and both the weak region 52 and the groove portion 53 are located below the mid-plane Y. The weak region 52 may be located on the case 12, or the weak region 52 may be located on the end cover 11. The weak region 52 may be located on a side wall 121a of the case 12, or may be located on a bottom wall 121b of the case 12. As shown in FIG. 40, for example, the weak region 52 is located on the side wall 121a of the case 12. The bottom wall 121b of the case 12 may be located below the end cover 11, and the weak region 52 may be located below the mid-plane Y, so that a distance from the weak region 52 to the bottom wall 121b of the case 12 is larger than a distance from the weak region 52 to the end cover 11.

Since the weak region 52 is located in the lower part of the battery cell 10, in a service process of the battery 100, under the gravity of the electrode assembly 2, an electrolyte solution, and the like inside the battery cell 10, the weak region 52 is subjected to a great force. As an integrally formed structure, the weak region 52 and the non-weak region 51 have a good structural strength and better reliability, thereby improving the service life of the battery cell 10.

In some embodiments, the battery cell 10 comprises a case 12, the case 12 is configured to accommodate an electrode assembly 2, the case 12 comprises a bottom wall 121b and a plurality of side walls 121a arranged around the bottom wall 121b that are integrally formed, the bottom wall 121b and the side walls 121a are integrally formed, the case 12 is formed with an opening at one end opposite to the bottom wall 121b, and the weak region 52 is located on the bottom wall 121b.

It can be understood that the bottom wall 121b is located below the mid-plane Y.

In the present embodiment, the weak region 52 is located on the bottom wall 121b, so that the weak region 52 is arranged downward. After the weak region 52 is damaged during thermal runaway of the battery cell 10, emissions in the battery cell 10 will be ejected out downward, thereby reducing the risks of safety accidents. For example, in a vehicle 1000, the battery 100 is generally installed below a passenger compartment, and the weak region 52 is arranged downward, so that the emissions emitted from the battery cell 10 during thermal runaway are ejected out in a direction away from the passenger compartment, thereby reducing the impact of the emissions on the passenger compartment, and reducing the risks of safety accidents.

In some embodiments, the battery cell 10 comprises an end cover 11, the end cover 11 is configured to close an opening of the case 12, the case 12 is configured to accommodate an electrode assembly 2, and the weak region 52 is located on the end cover 11.

It can be understood that the end cover 11 is located below the mid-plane Y.

In the present embodiment, the weak region 52 is located on the end cover 11, so that the weak region 52 is arranged downward. After the weak region 52 is damaged during thermal runaway of the battery cell 10, emissions in the battery cell 10 will be ejected out downward, thereby reducing the risks of safety accidents.

An embodiment of the present application provides an electrical device, comprising the battery 100 provided in any one of the above embodiments.

In some embodiments, an embodiment of the present application provides an end cover 11 for a battery cell 10. The end cover 11 comprises a non-weak region 51 and a weak region 52 that are integrally formed. The end cover 11 is provided with a groove portion 53, the non-weak region 51 is formed around the groove portion 53, the weak region 52 is formed at the bottom of the groove portion 53, and the weak region 52 is configured to be damaged when an internal pressure of the battery cell 10 is released. The end cover 11 comprises a first surface 54 away from an inner side of the battery cell 10. The groove portion 53 forms an outer edge 534 on the first surface 54. A region of the end cover 11 beyond a preset distance from the outer edge 534 is the non-weak region 51. The preset distance is L, L=5 mm. An average grain size of the weak region 52 is S₁, an average grain size of the non-weak region 51 is S₂, the smallest thickness of the weak region 52 is A, the smallest thickness of the non-weak region 51 is B, hardness of the weak region 52 is H₁, and the hardness of the non-weak region 51 is H₂, satisfying: 0.1≤S₁/S₂≤0.5, 5≤A/S₁≤20, 190 HBW/mm≤H₁/A≤4000 HBW/mm, 1<H₁/H₂≤2.5, and 0.2≤A/B≤0.5.

In some embodiments, an embodiment of the present application provides a case 12 for a battery cell 10. The case 12 comprises a non-weak region 51 and a weak region 52 that are integrally formed. The case 12 is provided with the groove portion 53, the non-weak region 51 is formed around the groove portion 53, the weak region 52 is formed at the bottom of the groove portion 53, and the weak region 52 is configured to be damaged when the internal pressure of the battery cell 10 is released. The case 12 comprises a first surface 54 away from an inner side of the battery cell 10. The groove portion 53 forms an outer edge 534 on the first surface 54. A region of the case 12 beyond a preset distance from the outer edge 534 is the non-weak region 51. The preset distance is L, L=5 mm. An average grain size of the weak region 52 is S₁, an average grain size of the non-weak region 51 is S₂, the smallest thickness of the weak region 52 is A, the smallest thickness of the non-weak region 51 is B, hardness of the weak region 52 is H₁, and the hardness of the non-weak region 51 is H₂, satisfying: 0.1≤S₁/S₂≤0.5, 5≤A/S₁≤20, 190 HBW/mm≤H₁/A≤4000 HBW/mm, 1<H₁/H₂≤2.5, and 0.2≤A/B≤0.5.

The features and performance of the present application are described in further detail below with reference to the examples.

In the examples and comparative examples, the battery cell 10 is a square battery cell, the end cover 11 in the battery cell 10 serves as the shell component 5, and the battery cell 10 has a capacity of 150 Ah and a chemical system of NCM.

### I. Test method

(1) Average grain size tests of weak region 52 and non-weak region 51.
   The average grain size of the weak region 52 and the average grain size of the non-weak region 51 were tested using electron backscattered diffraction (EBSD) method. The shell component 5 was cut into 3 segments. Each section at either end of the middle segment comprises a weak region 52 and a non-weak region 51. The cutting direction is perpendicular to a length direction of the weak region 52, so that the cutting device does not change the grain structure. The middle segment was selected for sampling. After electropolishing of the sample, the sample was fixed on a sample bench tilted at 70°, an appropriate magnification factor was selected, an EBSD scan was performed using a scanning electron microscope (SEM) equipped with an electron backscattered diffraction (EBSD) attachment, and finally an average grain size (i.e., an equal-area circle diameter of complete grains in an inspection surface) was computed based on the scanning result.
(2) Smallest thickness tests of weak region 52 and non-weak region 51.
   The shell component 5 was cut into 3 segments, and the middle segment was taken as the sample. Each section at either end of the sample comprises a weak region 52 and a non-weak region 51. The cutting direction is perpendicular to a length direction of the weak region 52. After a section of the middle segment was polished for fully deburring, the sample was placed on a three-dimensional coordinate measuring machine, to measure thicknesses of the weak region 52 and the non-weak region 51 on the section.
(3) Hardness tests of weak region 52 and non-weak region 51.
   The shell component 5 was cut into 3 segments, and the middle segment was taken as the sample. Each section at either end of the sample comprises a weak region 52 and a non-weak region 51. The cutting direction is perpendicular to a length direction of the weak region 52. After the test section was polished for fully deburring, the sample was placed horizontally (with the sample section direction parallel to the extrusion direction of the hardness tester) on a Brinell hardness tester to measure the hardness. If the width size of the weak region 52 is <1mm or the indenter size of the Brinell hardness tester is much larger than the width of the weak region 52, a non-standard indenter should be processed for hardness measurement in accordance with the Brinell hardness measurement and conversion principle.
(4) Cracking rate of weak region 52 under normal usage conditions of battery cell 10.
   The battery cell 10 was placed at 25±2°C for cyclic charging and discharging in a charge and discharge range of 5%-97% SOC, while monitoring the internal gas pressure of the battery cell 10. 500 groups of tests were performed simultaneously. The test cut-off conditions were: the life of the battery cell 10 decreased to 80% SOH or the weak region 52 in any one group of battery cells 10 cracked during the cycle. The conditions for determining cracking of the weak region 52 were: the internal gas pressure value of the battery cell 10 decreased by more than10% of the maximum gas pressure. The cracking rate of the weak region 52 was counted based on cracking rate=number of cracks/total number*100%.
(5) Explosion rate of battery cell 10 during thermal runaway.
   A small built-in heating film was provided in the battery cell 10. The heating film was powered on to heat the battery cell 10 until thermal runaway of the battery cell 10, to observe whether explosion of the battery cell 10 occurred. 500 groups of tests were repeated to count the explosion rate of battery cells 10 based on explosion rate=number of explosions/total number*100%.

### II. Test results

In the examples and comparative examples, the test results of the average grain size S₁ of the weak region 52, the average grain size S₂ of the non-weak region 51, the smallest thickness A of the weak region 52, the smallest thickness B of the non-weak region 51, the hardness H₁ of the weak region 52, and the hardness H₂ of the non-weak region 51 were as shown in Table I. In Table I, the unit of S₁ and S₂ is mm, the unit of A and B is mm, and the unit of H₁ and H₂ is HBW. The cracking rate Q₁ of the weak region 52 under normal usage conditions of the battery cell 10 and the explosion rate Q₂ of the battery cell 10 during thermal runaway are shown in Table II.

**Table I**

| | S₁ | S₂ | S₁/S₂ | A | A/S₁ | H₁ | H₁/A | H₂ | H₁/H₂ | B | A/B |
|---|---|---|---|---|---|---|---|---|---|---|---|
| Example 1 | 0.036 | 0.04 | 0.9 | 0.15 | 4.167 | 90 | 600 | 52.5 | 1.714 | 1.5 | 0.1 |
| Example 2 | 0.028 | 0.04 | 0.7 | 0.15 | 5.357 | 90 | 600 | 52.5 | 1.714 | 1.5 | 0.1 |
| Example 3 | 0.02 | 0.04 | 0.5 | 0.15 | 7.5 | 90 | 600 | 52.5 | 1.714 | 1.5 | 0.1 |
| Example 4 | 0.01 | 0.04 | 0.25 | 0.15 | 15 | 90 | 600 | 52.5 | 1.714 | 1.5 | 0.1 |
| Example 5 | 0.004 | 0.04 | 0.1 | 0.15 | 37.5 | 90 | 600 | 52.5 | 1.714 | 1.5 | 0.1 |
| Example 6 | 0.002 | 0.04 | 0.05 | 0.15 | 75 | 90 | 600 | 52.5 | 1.714 | 1.5 | 0.1 |
| Example 7 | 0.0016 | 0.04 | 0.04 | 0.15 | 93.75 | 90 | 600 | 52.5 | 1.714 | 1.5 | 0.1 |
| Example 8 | 0.01 | 0.04 | 0.25 | 1.2 | 120 | 90 | 75 | 52.5 | 1.714 | 1.5 | 0.8 |
| Example 9 | 0.01 | 0.04 | 0.25 | 1 | 100 | 90 | 90 | 52.5 | 1.714 | 1.5 | 0.667 |
| Example 10 | 0.01 | 0.04 | 0.25 | 0.2 | 20 | 90 | 450 | 52.5 | 1.714 | 1.5 | 0.133 |
| Example 11 | 0.01 | 0.04 | 0.25 | 0.05 | 5 | 90 | 1800 | 52.5 | 1.714 | 1.5 | 0.033 |
| Example 12 | 0.01 | 0.04 | 0.25 | 0.01 | 1 | 90 | 9000 | 52.5 | 1.714 | 1.5 | 0.007 |
| Example 13 | 0.01 | 0.04 | 0.25 | 0.016 | 1.6 | 200 | 12500 | 100 | 2 | 1.5 | 0.011 |
| Example 14 | 0.01 | 0.04 | 0.25 | 0.02 | 2 | 200 | 10000 | 100 | 2 | 1.5 | 0.013 |
| Example 15 | 0.01 | 0.04 | 0.25 | 0.05 | 5 | 200 | 4000 | 100 | 2 | 1.5 | 0.033 |
| Example 16 | 0.01 | 0.04 | 0.25 | 0.1 | 10 | 19 | 190 | 9.5 | 2 | 1.5 | 0.067 |
| Example 17 | 0.01 | 0.04 | 0.25 | 1 | 100 | 6 | 6 | 3 | 2 | 1.5 | 0.667 |
| Example 18 | 0.01 | 0.04 | 0.25 | 1.2 | 120 | 4.8 | 4 | 2.4 | 2 | 1.5 | 0.8 |
| Example 19 | 0.01 | 0.04 | 0.25 | 0.15 | 15 | 315 | 2100 | 52.5 | 6 | 1.5 | 0.1 |
| Example 20 | 0.01 | 0.04 | 0.25 | 0.15 | 15 | 262.5 | 1750 | 52.5 | 5 | 1.5 | 0.1 |
| Example 21 | 0.01 | 0.04 | 0.25 | 0.15 | 15 | 131.25 | 875 | 52.5 | 2.5 | 1.5 | 0.1 |
| Example 22 | 0.01 | 0.04 | 0.25 | 0.15 | 15 | 52.5 | 350 | 52.5 | 1 | 1.5 | 0.1 |
| Example 23 | 0.01 | 0.04 | 0.25 | 0.15 | 15 | 42 | 280 | 52.5 | 0.8 | 1.5 | 0.1 |
| Example 24 | 0.01 | 0.04 | 0.25 | 1.47 | 147 | 90 | 61.224 | 52.5 | 1.714 | 1.5 | 0.98 |
| Example 25 | 0.01 | 0.04 | 0.25 | 1.425 | 143 | 90 | 63.158 | 52.5 | 1.714 | 1.5 | 0.95 |
| Example 26 | 0.01 | 0.04 | 0.25 | 1.2 | 120 | 90 | 75 | 52.5 | 1.714 | 1.5 | 0.8 |
| Example 27 | 0.01 | 0.04 | 0.25 | 0.75 | 75 | 90 | 120 | 52.5 | 1.714 | 1.5 | 0.5 |
| Example 28 | 0.01 | 0.04 | 0.25 | 0.3 | 30 | 90 | 300 | 52.5 | 1.714 | 1.5 | 0.2 |
| Example 29 | 0.01 | 0.04 | 0.25 | 0.18 | 18 | 90 | 500 | 52.5 | 1.714 | 1.5 | 0.12 |
| Example 30 | 0.01 | 0.04 | 0.25 | 0.075 | 7.5 | 90 | 1200 | 52.5 | 1.714 | 1.5 | 0.05 |
| Example 31 | 0.01 | 0.04 | 0.25 | 0.06 | 6 | 90 | 1500 | 52.5 | 1.714 | 1.5 | 0.04 |
| Comparative Example 1 | 0.038 | 0.04 | 0.95 | 0.15 | 3.947 | 90 | 600 | 52.5 | 1.714 | 1.5 | 0.1 |
| Comparative Example 2 | 0.04 | 0.04 | 1 | 0.15 | 3.75 | 90 | 600 | 52.5 | 1.714 | 1.5 | 0.1 |
| Comparative Example 3 | 0.048 | 0.04 | 1.2 | 0.15 | 3.125 | 90 | 600 | 52.5 | 1.714 | 1.5 | 0.1 |

**Table II**

| | Q₁ | Q₂ |
|---|---|---|
| Example 1 | 8.8% | 0.6% |
| Example 2 | 6.8% | 0.8% |
| Example 3 | 6.2% | 1.4% |
| Example 4 | 5% | 1.6% |
| Example 5 | 2.8% | 2.8% |
| Example 6 | 0.8% | 4.2% |
| Example 7 | 0.6% | 8.4% |
| Example 8 | 0.4% | 8% |
| Example 9 | 1.2% | 4% |
| Example 10 | 2.6% | 1.8% |
| Example 11 | 3.2% | 1.4% |
| Example 12 | 6% | 1% |
| Example 13 | 10.2% | 0.6% |
| Example 14 | 6.2% | 1.8% |
| Example 15 | 3.8% | 3.8% |
| Example 16 | 2.4% | 6.6% |
| Example 17 | 1% | 8.8% |
| Example 18 | 0.8% | 12% |
| Example 19 | 1.2% | 10% |
| Example 20 | 1.8% | 4.4% |
| Example 21 | 2.4% | 2.2% |
| Example 22 | 6% | 1.4% |
| Example 23 | 8% | 1% |
| Example 24 | 1% | 14.2% |
| Example 25 | 1.4% | 9.2% |
| Example 26 | 2.2% | 8% |
| Example 27 | 3% | 3.6% |
| Example 28 | 3.6% | 1.6% |
| Example 29 | 5% | 1% |
| Example 30 | 7.4% | 0.4% |
| Example 31 | 10.4% | 0.4% |
| Comparative Example 1 | 20.2% | 0.6% |
| Comparative Example 2 | 22.4% | 0.4% |
| Comparative Example 3 | 26.4% | 0.4% |

Based on Table I and Table II, as can be seen from Examples 1-7, when S₁/S₂≤0.9, the cracking rate of the weak region 52 is low under normal usage conditions of the battery cell 10. In Comparative Example 1, 0.9<S₁/S₂<1, the cracking rate of weak region 52 under normal usage conditions of battery cell 10 is significantly increased; in Comparative Example 2, S₁/S₂=1, the cracking rate of the weak region 52 under normal usage conditions of the battery cell 10 is significantly increased; and in Comparative Example 3, S₁/S₂>1, the cracking rate of the weak region 52 under normal usage conditions of the battery cell 10 is also significantly increased. As can be seen from the comparison between Examples 1-7 and Comparative Examples 1-3, controlling S₁/S₂ to less than or equal to 0.9 can effectively reduce the risk of damage to the weak region 52 under normal usage conditions of the battery cell 10, thereby extending the service of life the battery cell 10.

As can be seen from Example 7, when S₁/S₂<0.05, it is more difficult for the weak region 52 to be damaged during thermal runaway of the battery cell 10, the pressure fails to be released promptly, and the risks of explosion of the battery cell 10 are significantly increased. As can be seen from Examples 3-5, when 0.1≤S₁/S₂≤0.5, both the cracking rate of the weak region 52 under the normal usage conditions of the battery cell 10 and the explosion rate of the battery cell 10 during thermal runaway are low, to ensure that the weak region 52 has sufficient strength under normal usage conditions of the battery cell 10, while ensuring that the weak region 52 can be promptly damaged during thermal runaway of the battery cell 10.

As can be seen from the comparison between Examples 9-12 and Example 8, when 1≤A/S₁≤100, the pressure of the battery cell 10 can be promptly released during thermal runaway, and the explosion rate of the battery cell 10 is low. When 5≤A/S₁≤20, the comprehensive performance of the battery cell 10 is better, and both the cracking rate of the weak region 52 under normal usage conditions of the battery cell 10 and the explosion rate of the battery cell 10 during thermal runaway are low.

As can be seen from the comparison between Examples 14-17 and Example 13, when H₁/A>10000 HBW/mm, the cracking rate of the weak region 52 under normal usage conditions of the battery cell 10 is high. As can be seen from the comparison between Examples 14-17 and Example 18, when H₁/A<5 HBW/mm, the explosion rate of the battery cell 10 during thermal runaway is high. 5 HBW/mm≤H₁/A≤1 0000 HBW/mm not only can reduce the risks of rupture of the weak region 52 under normal usage conditions of the battery cell 10, but also can enable timely pressure relief through the weak region 52 during thermal runaway of the battery cell 10, and reduce the risks of explosion of the battery cell 10. As can be seen from Examples 15-16, when 190 HBW/mm≤H₁/A≤4000 HBW/mm, the comprehensive performance of the battery cell 10 is better, and both the cracking rate of the weak region 52 under normal usage conditions of the battery cell 10 and the explosion rate of the battery cell 10 during thermal runaway are low.

As can be seen from the comparison between Examples 19-21 and Examples 22-23, when H₁/H₂≤1, the cracking rate of the weak region 52 under normal usage conditions of the battery cell 10 is high. H₁/H₂>1 can effectively reduce the cracking rate of the weak region 52 under normal usage conditions of the battery cell 10. As can be seen from the comparison between Examples 20-21 and Example 19, when H₁/H₂>5, the explosion rate of the battery cell 10 during thermal runaway is high. H₁/H₂≤5 can reduce the risks of explosion of the battery cell 10.

As can be seen from the comparison between Examples 25-30 and Example 24, when A/B>0.95, the explosion rate of the battery cell 10 during thermal runaway is high. As can be seen from the comparison between Examples 25-30 and Example 31, when A/B<0.05, the cracking rate of the weak region 52 under normal usage conditions of the battery cell 10 is high. 0.05≤A/B≤0.95 not only can reduce the risks of rupture of the weak region 52 under normal usage conditions of the battery cell 10, but also can enable timely pressure relief through the weak region 52 during thermal runaway of the battery cell 10, and reduce the risks of explosion of the battery cell 10. As can be seen from Examples 26-29, when 0.12≤A/B≤0.8, the comprehensive performance of the battery cell 10 is better, and both the cracking rate of the weak region 52 under normal usage conditions of the battery cell 10 and the explosion rate of the battery cell 10 during thermal runaway are low; and when 0.2≤A/B≤0.5, the effects are better.

It should be noted that the embodiments in the present application and the features in the embodiments may be combined with each other in case of no conflict.

The above embodiments are only used to illustrate the technical solutions of the present application, and are not intended to limit the present application. For those skilled in the art, the present application may have various modifications and alterations. Any modification, equivalent replacement, improvement, and the like made within the spirit and principle of the present application should be encompassed within the scope of protection of the present application.

## Claims

1. A shell component for a battery cell, comprising a non-weak region and a weak region that are integrally formed, wherein the shell component is provided with a groove portion, the non-weak region is formed around the groove portion, the weak region is formed at a bottom of the groove portion, and the weak region is configured to be damaged when an internal pressure of the battery cell is released,
wherein an average grain size of the weak region is S₁, and an average grain size of the non-weak region is S₂, satisfying: S₁/S₂≤0.9.

2. The shell component according to claim 1, wherein S₁/S₂≥0.05.

3. The shell component according to claim 1 or 2, wherein 0.1≤S₁/S₂≤0.5.

4. The shell component according to any one of claims 1-3, wherein: 0.4 µm≤S₁≤75 µm; and preferably,1 µm≤S₁≤10 µm.

5. The shell component according to any one of claims 1-4, wherein: 10 µm≤S₂≤150 µm; and preferably, 30 µm≤S₂≤100 µm.

6. The shell component according to any one of claims 1-5, wherein: a smallest thickness of the weak region is A, satisfying: 1≤A/S₁≤100; and preferably, 5≤A/S₁≤20.

7. The shell component according to any one of claims 1-6, wherein: a smallest thickness of the weak region is A, and hardness of the weak region is H₁, satisfying: 5 HBW/mm≤H₁/A≤10000 HBW/mm; and preferably, 190 HBW/mm≤H₁/A≤4000 HBW/mm.

8. The shell component according to claim 7, wherein: 0.02 mm≤A≤1.6 mm; and preferably, 0.06 mm≤A≤0.4 mm.

9. The shell component according to any one of claims 1-8, wherein hardness of the weak region is H₁, and hardness of the non-weak region is H₂, satisfying: H₁>H₂.

10. The shell component according to claim 9, wherein: H₁/H₂≤5; and preferably, H₁/H₂≤2.5.

11. The shell component according to claim 9 or 10, wherein 5 HBW≤H₂≤150 HBW.

12. The shell component according to any one of claims 7-11, wherein 5 HBW≤H₁≤200 HBW.

13. The shell component according to any one of claims 1-12, wherein: a smallest thickness of the weak region is A, and a smallest thickness of the non-weak region is B, satisfying: 0.05≤A/B≤0.95; preferably, 0.12≤A/B≤0.8; and preferably, 0.2≤A/B≤0.5.

14. The shell component according to claim 13, wherein: 0.02 mm≤A≤1.6 mm; and preferably, 0.06 mm≤A≤0.4 mm.

15. The shell component according to claim 13 or 14, wherein: 1 mm≤B≤5 mm; preferably, 1.2 mm≤B≤3.5 mm; and preferably, 2 mm≤B≤3 mm.

16. The shell component according to any one of claims 1-15, wherein the shell component comprises a pressure relief region, and the groove portion comprises a score groove, wherein:
the score groove is arranged along an edge of the pressure relief region, the pressure relief region is configured to be openable with the score groove as a boundary, and the weak region forms a bottom of the score groove.

17. The shell component according to claim 16, wherein the shell component comprises a first surface and a second surface that are oppositely arranged, and the score groove is recessed from the first surface in a direction toward the second surface.

18. The shell component according to any one of claims 1-15, wherein:
the shell component comprises a first surface and a second surface that are oppositely arranged, and the groove portion comprises multiple score grooves, wherein the multiple score grooves are sequentially arranged on the shell component along a direction from the first surface to the second surface, and the weak region is formed at a bottom of a score groove farthest from the first surface; and
the shell component comprises a pressure relief region, each of the score grooves is arranged along an edge of the pressure relief region, and the pressure relief region is configured to be openable with the score groove farthest from the first surface as a boundary.

19. The shell component according to claim 18, wherein a score groove farthest from the second surface is recessed from the first surface in a direction toward the second surface.

20. The shell component according to claim 16 or 18, wherein the shell component comprises a first surface and a second surface that are oppositely arranged, and the groove portion further comprises a sunk groove, wherein the sunk groove is recessed from the first surface in a direction toward the second surface, and the pressure relief region is formed on a groove bottom wall of the sunk groove.

21. The shell component according to claim 16 or 18, wherein the shell component comprises a first surface and a second surface that are oppositely arranged, and the groove portion further comprises multiple sunk grooves, wherein the multiple sunk grooves are sequentially arranged on the shell component along a direction from the first surface to the second surface, a sunk groove farthest from the second surface is recessed from the first surface in a direction toward the second surface, and the pressure relief region is formed on a groove bottom wall of a sunk groove farthest from the first surface.

22. The shell component according to claim 20 or 21, wherein an internal space of the sunk groove is a cylinder, a prismoid, a frustum of a cone, or a frustum of a prism.

23. The shell component according to any one of claims 16-22, wherein the score groove comprises a first groove segment and a second groove segment, the first groove segment intersects with the second groove segment, and the first groove segment and the second groove segment are arranged along the edge of the pressure relief region.

24. The shell component according to claim 23, wherein the score groove further comprises a third groove segment, the first groove segment and the third groove segment are oppositely arranged, the second groove segment intersects with the third groove segment, and the first groove segment, the second groove segment, and the third groove segment are arranged along the edge of the pressure relief region.

25. The shell component according to claim 24, wherein the first groove segment, the second groove segment, and the third groove segment are sequentially connected, and the first groove segment, the second groove segment, and the third groove segment define one said pressure relief region.

26. The shell component according to claim 24, wherein the first groove segment, the second groove segment, and the third groove segment define two said pressure relief regions, and the two pressure relief regions are located on both sides of the second groove segment respectively.

27. The shell component according to any one of claims 16-22, wherein the score groove is a groove extending along a non-closed trajectory.

28. The shell component according to any one of claims 16-22 and 27, wherein the score groove is a circular arc groove.

29. The shell component according to any one of claims 16-22, wherein the score groove is a groove extending along a closed trajectory.

30. The shell component according to any one of claims 16-22 and 29, wherein the score groove is an annular groove.

31. The shell component according to any one of claims 16-30, wherein: an area of the pressure relief region is D, satisfying: 90 mm²≤D≤1500 mm²; preferably, 150 mm²≤D≤1200 mm²; preferably, 200 mm²≤D≤1000 mm²; and preferably, 250 mm²≤D≤800 mm².

32. The shell component according to any one of claims 1-31, wherein the shell component comprises a first surface and a second surface that are oppositely arranged, the groove portion is recessed from the first surface in a direction toward the second surface, the groove portion forms an outer edge on the first surface, and a region of the shell component beyond a preset distance from the outer edge is the non-weak region.

33. The shell component according to claim 32, wherein the preset distance is L, satisfying: L=5mm.

34. The shell component according to any one of claims 1-33, wherein the shell component further comprises a transition region, the transition region connects the weak region to the non-weak region, and an average grain size of the transition region is S₃, satisfying: S₃≤S₂.

35. The shell component according to any one of claims 1-34, wherein the shell component is an end cover, the end cover is configured to close an opening of a case, and the case is configured to accommodate an electrode assembly.

36. The shell component according to any one of claims 1-34, wherein the shell component is a case, the case comprises an opening, and the case is configured to accommodate an electrode assembly.

37. The shell component according to claim 36, wherein the case comprises a plurality of integrally formed wall portions, the plurality of wall portions jointly define an internal space of the case, and at least one of the wall portions is provided with the groove portion.

38. The shell component according to claim 37, wherein the plurality of wall portions comprise a bottom wall and a plurality of side walls arranged around the bottom wall, and the case is formed with the opening at one end opposite the bottom wall, wherein:
the bottom wall is provided with the groove portion; and/or
at least one of the side walls is provided with the groove portion.

39. The shell component according to any one of claims 36-38, wherein the case is a cuboid.

40. The shell component according to any one of claims 1-39, wherein a material of the shell component comprises an aluminum alloy.

41. The shell component according to claim 40, wherein the aluminum alloy comprises components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

42. The shell component according to claim 40, wherein the aluminum alloy comprises components at percentage mass contents of: aluminum≥96.7%, 0.05%≤copper≤0.2%, iron≤0.7%, manganese≤1.5%, silicon≤0.6%, zinc≤0.1%, other individual elements each≤0.05%, and other elements in total≤0.15%.

43. A battery cell, comprising:
the shell component according to any one of claims 1-42.

44. The battery cell according to claim 43, wherein:
the battery cell further comprises a case, the case comprises an opening, and the case is configured to accommodate an electrode assembly; and
the shell component is an end cover, and the end cover closes the opening.

45. The battery cell according to claim 43, wherein:
the shell component is a case, the case comprises an opening, and the case is configured to accommodate an electrode assembly; and
the battery cell further comprises an end cover, and the end cover closes the opening.

46. A battery, comprising the battery cell according to any one of claims 43-45.

47. The battery according to claim 46, wherein the weak region is located in a lower part of the battery cell.

48. The battery according to claim 47, wherein the battery cell comprises a case, wherein:
the case is configured to accommodate an electrode assembly;
the case comprises a bottom wall and a plurality of side walls arranged around the bottom wall, wherein the bottom wall and the side walls are integrally formed; and
the case is formed with an opening at one end opposite the bottom wall, and the weak region is located on the bottom wall.

49. The battery according to claim 47, wherein the battery cell comprises an end cover, the end cover is configured to close an opening of the case, the case is configured to accommodate an electrode assembly, and the weak region is located on the end cover.

50. An electrical device, comprising the battery according to any one of claims 46-49.
